(19) Europäisches Patentamt
European Patent Office
Office européen des brevets

(11) **EP 2 821 215 B1**

(12) **EUROPÄISCHE PATENTSCHRIFT**

(45) Veröffentlichungstag und Bekanntmachung des Hinweises auf die Patenterteilung:
**19.04.2023 Patentblatt 2023/16**

(21) Anmeldenummer: **14172366.8**

(22) Anmeldetag: **13.06.2014**

(51) Internationale Patentklassifikation (IPC):
**B30B 15/00** (2006.01)     **B30B 15/26** (2006.01)
**H01R 43/048** (2006.01)

(52) Gemeinsame Patentklassifikation (CPC):
**B30B 15/0094; B21D 5/01; B30B 15/26;**
**G05B 19/18;** G05B 2219/50348

(54) **Umformverfahren mit Regelung einer geometrischen Eigenschaft eines Werkstücks und Vorrichtung dazu**

Forming method with control of a geometric characteristic of a workpiece and device for the same

Procédé de déformation présentant un réglage d'une caractéristique géométrique d'une pièce à usiner et dispositif associé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2013 DE 102013211045**

(43) Veröffentlichungstag der Anmeldung:
**07.01.2015 Patentblatt 2015/02**

(73) Patentinhaber: **Otto Bihler Handels-Beteiligungs-GmbH 87642 Halblech (DE)**

(72) Erfinder:
• **Muche, Norbert**
  **87669 Rieden am Forggensee (DE)**
• **Maldoner, Paul**
  **87669 Rieden (DE)**

(74) Vertreter: **Weickmann & Weickmann PartmbB Postfach 860 820 81635 München (DE)**

(56) Entgegenhaltungen:
EP-A1- 0 902 509      EP-A1- 1 383 212
EP-A1- 2 173 015      EP-A2- 0 989 636
DE-C1- 4 005 399      US-A- 5 857 366
US-A1- 2002 050 159

**Beschreibung**

Die Erfindung betrifft ein Verfahren zur Durchführung eines Umformprozesses mittels einer Umformvorrichtung, die eine Steuereinrichtung, wenigstens ein Umformwerkzeug und wenigstens ein Gegenwerkzeug zum Umformen eines Werkstücks aus einem Rohmaterial, sowie eine Bewegungseinrichtung zur Bewegung des Umformwerkzeugs und des Gegenwerkzeugs relativ zueinander umfasst. Die Steuereinrichtung steuert die Bewegungseinrichtung unter Vorgabe einer Stellgröße $y_{RS}$ derart, dass das Umformwerkzeug und/oder das Gegenwerkzeug zur Bewegung in eine Umformposition oder zum Erreichen einer Umformkraft angetrieben wird, um das Werkstück durch Beaufschlagung mit dem Umformwerkzeug und dem Gegenwerkzeug mit einer vorgegebenen geometrischen Eigenschaft zu versehen. Weiter betrifft die Erfindung eine Vorrichtung zur Durchführung eines Umformprozesses. Die Erfindung betrifft insbesondere ein Verfahren zur seriellen Durchführung von gleichen Umformprozessen an gleichen Werkstücken aus einem Rohmaterial mittels einer Umformvorrichtung, wobei in jedem Umformprozess mehrere Umformschritte an dem jeweiligen Werkstück durchgeführt werden, wobei die Umformvorrichtung eine Steuereinrichtung, wenigstens ein Umformwerkzeug und wenigstens ein Gegenwerkzeug zum Umformen des Werkstücks in einem jeweiligen Umformschritt, sowie eine Bewegungseinrichtung zur Bewegung des jeweiligen Umformwerkzeugs und Gegenwerkzeugs relativ zueinander in dem betreffenden Umformschritt umfasst, wobei zur Durchführung eines einem ersten Umformschritt unmittelbar oder ggf. nach wenigstens einem weiteren Umformschritt folgenden aktuellen Umformschrittes die Bewegungseinrichtung von der Steuereinrichtung mit einer Stellgröße $y_{Rs}$ angesteuert wird, derart, dass ein zur Durchführung des aktuellen Umformschrittes zu bewegendes Umformwerkzeug und/oder das betreffende Gegenwerkzeug zur Bewegung in eine Umformposition oder zum Erreichen einer Umformkraft angetrieben wird, um das Werkstück durch Beaufschlagung mit diesem Umformwerkzeug und dem Gegenwerkzeug mit einer vorgegebenen geometrischen Eigenschaft zu versehen.

Die Erfindung befasst sich mit einem Verfahren der Massenherstellung von umgeformten Werkstücken, wobei der Umformprozess wenigstens einen Biegeschritt umfassen kann.

Es sind Umformmaschinen bekannt, mit denen ein Rohmaterial beispielsweise von einem Coil abgelängt und umgeformt werden kann, um eine Vielzahl von gleichen Werkstücken herzustellen. Ein Beispiel für eine solche Maschine ist die Bihler BIMERIC BM 306 der Otto Bihler Maschinenfabrik GmbH & Co. KG, Halblech. Um vorgegebene Toleranzen von geometrischen Eigenschaften eines Werkstücks zu erreichen, ist es bei bekannten Maschinen bisher üblich, nach dem Einsetzen der entsprechenden Umform- und Gegenwerkzeuge die Maschine einzurichten. Dies bedeutet, dass Einstellungen der Werkzeugpositionen, Vorschubwege, Presskräfte und dgl. so eingestellt werden, dass die geometrische Eigenschaft des in Serie hergestellten Werkstücks einschließlich seiner Streubreite innerhalb eines vorgegebenen Toleranzbands liegt. Der Einrichtvorgang ist üblicherweise mit wiederkehrenden Probeumformungen verbunden. Insgesamt ist der Einrichtvorgang zeitintensiv und damit kostenaufwendig, was einen Nachteil für den Betrieb einer solchen Umformmaschine darstellt. Bei Umformverfahren mit periodischen Umformprozessen zur Herstellung gleicher Werkstücke ist es üblicherweise erwünscht, dass die Werkstücke nach dem Umformprozess möglichst geringe Formabweichungen von einer Sollform aufweisen. Das Dokument US- A-5857366 beschreibt ein Verfahren und eine Umformungsvorrichtung zum umformen eines einzelnen Werkstücks, mit einer Steuereinrichtung, wobei der Biegungswinkel gemessen und der Druck erfasst wird.

Aufgabe der vorliegenden Erfindung ist es, ein Verfahren zu schaffen, mit denen Werkstücke mit geringer Formabweichungstoleranz im Massenbetrieb herstellbar sind und mit denen das Einrichten der Vorrichtung vereinfacht werden kann.

Zur bevorzugten Lösung dieser Aufgabe wird ein Verfahren gemäß Anspruch 1 vorgeschlagen.

Gegenstand der Erfindung ist ein Verfahren zur Durchführung eines Umformprozesses, bei dem die Steuerung der Bewegungseinrichtung unter Berücksichtigung messtechnisch erfasster Größen, die das Erzielen der vorgegebenen geometrischen Eigenschaften des Werkstücks beeinflusst, erfolgt. Mit der Rückkopplung eines gemessenen Wertes in die Steuerung der Bewegungseinrichtung ist es möglich, auf Schwankungen der Prozessbedingungen zu reagieren. Besonders bevorzugt ist der Umformprozess ein sich gleichartig, aber nicht unbedingt identisch wiederholender Umformprozess.

Erfindungsgemäß wird genutzt, dass der Umformprozess und insbesondere das Erzielen der vorgegebenen geometrischen Eigenschaft besonders gut durch die Messung folgender Größen charakterisiert werden kann:

- eine mittels der Umformvorrichtung auf das Werkstück ausgeübte Umformkraft oder eine davon abhängige Größe oder/und
- eine Temperatur der Umformvorrichtung
- oder/und eine geometrische Eigenschaft des Werkstücks oder/und eine geometrische Eigenschaft eines mittels der Umformvorrichtung in einem vorausgegangenen Umformprozess umgeformten Werkstücks.

Es hat sich gezeigt, dass ein besonders vorteilhaftes Regelverhalten erzielt werden kann, wenn bei der Steuerung der Bewegungseinrichtung zusätzlich zu wenigstens einer der vorstehend genannten Größen eine Umformkraft berücksichtigt wird, die bei der Umformung des Werkstückes in einem dem aktuellen Umformschritt vorausgegangen Umformschritt im aktuellen Umformprozess oder ggf. in einem vorausgegangenen Umformprozess gemessen wurde. Vorzugsweise handelt es sich bei dieser Umformkraft um ein im Vergleich mit anderen Umformkräften in dem Umformprozess große, insbesondere die bis zum aktuellen Umformschritt größte Umformkraft, wobei der aktuelle Umformschritt vorzugsweise der abschließende Umformschritt in dem aktuellen Umformprozess ist. In den Ansprüchen 8 und 9 sind Beispiele angegeben, in welcher Weise eine solche in einem vorausgehenden Umformschritt gemessene Umformkraft im Regelprozess berücksichtigt werden kann. Sofern Umformschritte zeitlich parallel an dem Werkstück durchgeführt werden, kann auch oder alternativ ein Umformkraftwert eines Umformschrittes bei der Regelung eines aktuellen anderen Umformschrittes berücksichtigt werden.

Eine von der Umformkraft abhängige Größe kann beispielsweise eine Kraft sein, die außer der Umformkraft noch andere Kräfte beinhaltet, beispielsweise Beschleunigungskräfte von Werkzeugen. Außerdem kann zur Messung der Umformkraft oder einer Kraft, die die Umformkraft umfasst, auch eine andersartige Größe, etwa eine Verformung oder eine andere kraftabhängige Größe, herangezogen werden.

Eine Temperatur der Umformvorrichtung ist relevant, weil sich durch thermische Dehnungen von Teilen oder der ganzen Umformvorrichtung Abweichungen in deren Geometrie ergeben können. Insbesondere, wenn ein Werkstück mit geringen Toleranzen gefertigt werden soll, können selbst kleine Abweichungen der Maschinengeometrie zu Ausschuss führen. Eine Temperatur der Umformvorrichtung kann daher nicht nur die Temperatur der ganzen Maschine sein, die etwa nach einem längeren Stillstand annähernd gleichmäßig sein kann, sondern auch die Temperatur von einzelnen Teilen der Umformmaschine, insbesondere von Teilen, die sich während des Betriebs besonders stark erwärmen. Dies sind etwa ein NC-Antriebsmotor, ein Getriebe, insbesondere ein Spindel-Mutter-Getriebe, das eine Motordrehung in eine Linearbewegung umsetzt, oder Werkzeuge oder Werkzeugteile, die durch die Umformbeanspruchung warm werden können. Es ist auch denkbar, mehrere Temperaturen zu messen und diese gemittelt oder einzeln in die Steuerung bzw. Regelung des Umformprozesses einfließen zu lassen, etwa als ein oder mehrere Rückkopplungszweige einer Regelung.

Eine geometrische Eigenschaft des Werkstücks bezieht sich insbesondere auf eine Eigenschaft, die durch den Umformprozess besonders stark verändert wird. Anhand solcher geometrischer Eigenschaften kann der Umformprozess besonders gut eingeschätzt werden. Besonders bevorzugt werden jedoch geometrische Eigenschaften des Werkstücks herangezogen, für die vorgegebene Toleranzen zu erreichen sind. Insbesondere kann eine geometrische Eigenschaft, die in einem dem aktuellen Umformprozess vorausgegangenen Umformprozess erzeugt worden ist, zur Regelung des aktuellen Umformprozesses herangezogen werden. Auf diese Weise kann ein Einfluss auf den Umformprozess, der schon zuvor bestanden hat, erneut berücksichtigt werden, so dass dadurch die auf aktuellen Messwerten basierende Ausregelung der Einflüsse schon näher an dem zu erreichenden Sollwert arbeitet. Es ist auch denkbar, nicht nur eine geometrische Eigenschaft des Werkstücks, sondern mehrere zu regeln. Dazu können dieselben Messwerte mehrfach, insbesondere bereits ermittelte Eigenschaften eines Rohmaterials, oder verschiedene Messwerte herangezogen werden. Im Verlauf des Umformprozesses nacheinander erzeugte geometrische Eigenschaften können jeweils einzeln geregelt werden. Es ist jedoch auch denkbar, mit derselben Maßnahme mehrere geometrische Eigenschaften zugleich regelnd zu beeinflussen, insbesondere bei gleichzeitiger Herstellung von mehreren geometrischen Eigenschaften. Mit einer Steuerung der Bewegungseinrichtung, bei der es sich vorzugsweise um wenigstens einen elektromotorischen NC-Antrieb handelt, ist ein Vorgeben einer Bewegung oder einer zu erreichenden Position oder die Vorgabe einer Kraft, insbesondere einer Maximalkraft, im Sinne der Vorgabe einer Stellgröße für eine Regelstrecke gemeint. Dadurch ist das Umformergebnis beeinflussbar.

Als Bewegungseinrichtung zum Aufbringen von Umformkräften bzw. zum Erreichen einer Umformposition mit dem Umformwerkzeug und/oder dem Gegenwerkzeug kann eine numerisch gesteuerte NC-Vorschubachse bzw. ein NC-Umformaggregat verwendet werden. Vorzugsweise ist in eine solche NC-Vorschubachse eine Messeinrichtung integriert, mit der der vorgeschobene Weg und damit auch die Position des Umformwerkzeugs bzw. Gegenwerkzeugs ermittelt werden kann. Dazu kann eine Absolutmessung eingesetzt werden, wodurch das Setzen eines Referenzwertes entfallen kann.

In einer Ausführungsform der Erfindung wird die Bewegungseinrichtung in eine Umformposition als eine Position maximaler Annäherung oder Entfernung von Werkzeug und Gegenwerkzeug oder zum Erreichen einer Maximalkraft angetrieben, wobei $y_{RS}$ als Stellgröße für Kraft oder Annäherung dient. Bei einem Pressprozess ist die Stellung von Werkzeug und Gegenwerkzeug, in denen sie einander maximal angenähert sind, eine Stellung, die üblicherweise das Ende eines plastischen Umformprozesses markiert. Gleiches gilt für die maximale Entfernung von Werkzeug und Gegenwerkzeug für einen Ziehprozess. Beide Prozesse können für einen Biegeprozess bei entsprechender Auflagerung des Werkstücks genutzt werden. Die Umformposition $y_{RS}$ bei maximaler Annäherung oder Entfernung von Werkzeug und Gegenwerkzeug beeinflusst in besonderem Maße eine damit zusammenhängende geometrische Eigenschaft eines Werkstücks. Gleiches gilt für eine maximale Umformkraft oder davon abhängige Größe, die gemessen oder erzeugt werden können. Die maximale Annäherung oder Entfernung oder eine Maximalkraft sind somit als Stellgröße $y_{RS}$ in einem Regelprozess zur Beeinflussung einer geometrischen Eigenschaft des Werkstücks besonders geeignet.

Unabhängig von dieser Ausführungsform kann sich durch die Vorgabe einer Umformkraft und noch mehr bei der Vorgabe einer zu erreichenden Umformposition ein für die Bewegungseinrichtung kritischer Zustand ergeben, wenn ein mechanischer Maschinenfehler auftritt, wie etwa ein Werkzeugbruch, zwei Werkstücke statt einem zwischen Werkzeug und Gegenwerkzeug oder dgl. Die Maschine kann somit mechanisch in einer Position blockiert werden, in der die Steuerung der Bewegungseinrichtung weiter vorgibt, die Umformposition und/oder unter Umständen auch eine größere Umformkraft zu erreichen. Insbesondere bei der Verwendung eines integrierenden Reglers können dabei bis zur möglichen Maximalkraft der Bewegungseinrichtung zunehmende Kräfte auftreten. Üblicherweise wird die Bewegungseinrichtung so angesteuert, dass sie kurzzeitig unter sehr starker Wärmeentwicklung des Motors Maximalkräfte abgibt, wobei diese Phasen so kurz gehalten werden, dass der Motor der Bewegungseinrichtung nicht thermisch zerstört wird. Er kann in den folgenden Phasen ausreichend abkühlen. Wenn jedoch eine mechanische Blockade vorliegt, kann die Bewegungseinrichtung über längere Zeiten unter Maximalkraft arbeiten, was zur thermischen Zerstörung des Motors führen kann. Wenn ein solcher Zustand erkannt wird, wird der Antrieb bevorzugt abgeschaltet. Dies kann automatisch dadurch geschehen, dass ein Motorstrom und eventuell die Zeit, über die er anliegt, überwacht wird und bei Überschreiten von kritischen Grenzwerten das Abschalten des Motors eingeleitet wird. Alternativ oder zusätzlich kann die von dem Motor entwickelte Kraft und eventuell die Zeit, über die eine bestimmte Kraft anliegt, überwacht werden und ebenfalls bei Überschreitung kritischer Grenzwerte das Abschalten des Motorstroms eingeleitet werden. Zudem ist es denkbar, dass erkannt wird, wenn die Bewegungseinrichtung nicht in der zu erwartenden Weise einer Vorgabe bzgl. einer Position oder einer Bewegung folgt. Werden beim Erreichen vorgegebener Positionen z.B. zeitliche Grenzwerte überschritten, kann ebenfalls ein Abschalten des Motorstroms eingeleitet werden.

In einer weiteren Ausführungsform des Verfahrens werden Auswirkungen auf die geometrische Eigenschaft des Werkstücks auf Grund von Abweichungen der Geometrie des Rohmaterials und/oder einer Materialeigenschaft des Rohmaterials und/oder von thermischen Geometrieveränderungen der Umformvorrichtung ausgeregelt. Typischerweise sind die Materialeigenschaften des Rohmaterials nicht konstant. Beispielsweise werden häufig Bänder oder Drähte verarbeitet, wobei diese von einem Coil abgewickelt und abgelängt werden. Entlang des Rohmaterials kann beispielsweise die Dicke eines Bandes oder der Durchmesser eines Drahtes schwanken. Dies führt zum Beispiel zu unterschiedlichem Biegewiderstand des Rohmaterials und außerdem zu erheblich veränderten Umformkräften, wenn die gleichen Umformbedingungen wie bei einem Rohmaterial mit passender Dicke angewendet werden. Ähnliche Auswirkungen hat eine thermische Geometrieveränderung der Umformvorrichtung. Diese kann zu deutlich veränderten Umformkräften führen, wenn sich durch Temperaturänderungen zum Beispiel die maximale Annäherung oder Entfernung des Umformwerkzeugs von dem Gegenwerkzeug ändert. Insofern ist es sinnvoll, die in Bezug auf diese Ausführungsform genannten Einflussgrößen zu messen und diese Messwerte für die Regelung einer geometrischen Eigenschaft des Werkstücks heranzuziehen. Insbesondere kann eine Dicke des Rohmaterials gemessen werden oder auf diese aus anderen Messgrößen geschlossen werden, insbesondere aus der Umformkraft oder einer davon abhängigen Größe sowie möglicherweise einer Steifigkeit der Umformvorrichtung oder eines Teils davon, und/oder es kann die Temperatur an einer oder mehreren Stellen der Umformvorrichtung gemessen werden. Als weitere relevante Eigenschaften des Rohmaterials kommen dessen Fließgrenze oder etwa eine Abmessung quer zur Biegerichtung in Frage. Der Begriff Rohmaterial bedeutet hier nicht, dass das Rohmaterial nur aus einem Materialtyp bestehen muss, es kann beispielsweise auch einen Verbundwerkstoff umfassen, beispielsweise ein Bimetall.

Nach der Erfindung wird die Stellgröße $y_{RS}$ berechnet, indem dazu ein Krafteinflussterm

$$k_f \cdot \left( F_{mittel} - F_{Ist} \right)$$

allein oder in Verbindung mit weiteren additiven oder subtraktiven Termen herangezogen wird. In dem Krafteinflussterm bezeichnet $k_f$ einen Krafteinflussregelparameter, $F_{Ist}$ eine im aktuellen Umformschritt gemessene Umformkraft oder eine davon abgeleitete Größe als Kraftistwert, die an einer bestimmten Stelle im Ablauf des Umformvorgangs gemessen wird, und $F_{mittel}$ bezeichnet einen Mittelwert, der aus Werten der Umformkraft oder einer daraus wie in Bezug auf $F_{ist}$ abgeleiteten Größe, die an derselben Stelle im Verlauf von Umformprozessen gemessen wurde, die dem aktuellen Umformprozess vorausgegangen sind. Somit repräsentiert die Differenz von $F_{mittel}$ und $F_{ist}$ den Unterschied zwischen einer Umformkraft oder einer davon geleiteten Größe in dem aktuellen Umformschritt und den gemittelten entsprechenden Werten vorangegangener Umformprozesse. Der Regelung steht dann ein solcher Wert zur Verfügung. Damit kann die Regelung solche Einflüsse, beispielsweise der Dicke des Rohmaterials, erkennen und darauf reagieren, insbesondere wenn sie plötzlich auftreten. So ist es möglich, im laufenden Umformprozess auf die entstehende Umformkraft zu reagieren und Ausschuss zu vermeiden. Alternativ zur Bildung eines Mittelwertes aus vorangegangenen Umformkräften oder daraus abgeleiteten Größen ist es auch denkbar, nur den zuletzt vorangegangenen Wert einer Umformkraft oder eine daraus abgeleitete Größe zu verwenden. Mittels des Krafteinflussregelparameters $k_f$ kann das Ausmaß einer Reaktion auf Kraftschwankungen im aktuellen Prozess im Vergleich zu vorangegangenen Prozessen eingestellt werden. Außerdem dient der Krafteinflussregelparameter dazu, die Größe einer Kraft bzw. einer daraus abgeleiteten Größe in die Dimension der Stellgröße $y_{RS}$ für die Bewegungseinrichtung, also etwa in die Dimension einer Vorgabe einer Umformposition oder einer Kraft, umzuwandeln. Es ist denkbar, die Differenz zwischen $F_{mittel}$ und $F_{ist}$ nur einmal während eines Umformvorgangs zu bilden, es ist jedoch auch denkbar, dies bei mehreren Umformschritten, d.h. an mehreren Stellen im Verlauf des Umformprozesses oder kontinuierlich während des Umformprozesses oder Teilen davon auszuführen. Damit kann die Stellgröße $y_{RS}$ festgelegt werden, oder im Verlauf des Umformprozesses neu angepasst werden.

Wie schon erwähnt, wird die Erfassung einer Umformkraft oder einer davon abhängigen Größe wird besonders bevorzugt an Stellen im Verlauf des Umformprozesses durchgeführt, an denen besonders große Umformkräfte auftreten. Auf diese Weise lässt sich eine bessere Messgenauigkeit und damit letztlich eine bessere Regelgüte erreichen. Im Allgemeinen sind dies Umformvorgänge, die zu einer starken Verformung des Rohmaterials führen, etwa zu kleinen Biegeradien.

In einer weiteren Ausführungsform der Erfindung wird der Mittelwert $F_{mittel}$ der Umformkraft oder davon abhängigen Größe gemäß der Formel

$$F_{mittel} = \frac{1}{N_F} \sum_{i=1}^{N_F} \left( F_{Ist}^i \right)$$

ermittelt. Dabei bezeichnet i = 1 den zuletzt vorangegangenen Umformvorgang, mit dem die Aufsummierung mit zunehmendem i in Richtung Vergangenheit beginnt. $N_F$ geht als Anzahl der aufzusummierenden Werte der Umformkraft oder einer davon abhängigen Größe vorangegangener Umformprozesse in die Formel ein. Dazu werden Umformkräfte oder davon abhängige Größen verwendet, die an derselben Stelle im Verlauf des Umformprozesses gemessen wurden. Dies ist vorzugsweise auch die Stelle im Umformprozess, an der der Kraftistwert $F_{ist}$ gemessen wird, mit dem der Mittelwert $F_{mittel}$ verrechnet wird. Typischerweise sind die Schwankungen der Dicke des Rohmaterials periodisch wiederkehrend und haben eine annähernd konstante Wellenlänge. Die Werkstücke werden üblicherweise aus aufeinanderfolgenden Abschnitten des Rohmaterials hergestellt, indem das Rohmaterial entsprechend abgeschnitten wird. Vorzugsweise wird die Anzahl $N_F$ der aufzusummierenden Werte so gewählt, dass die Länge des Rohmaterials, aus dem die entsprechenden $N_F$ Werkstücke hergestellt sind, der Wellenlänge der periodischen Schwankung entspricht. Die Schwankung der Materialdicke wird dann besonders konstant gemittelt.

In einer weiteren Ausführungsform des Verfahrens wird eine gemessene, von der Umformkraft abhängige Größe korrigiert, sodass sie möglichst der reinen Umformkraft entspricht. Dazu werden andere Einflüsse auf die Größe, die sich von der Umformkraft unterscheiden, aus der gemessenen Größe möglichst weitgehend eliminiert. Ein wesentlicher Einfluss auf die gemessene Größe, insbesondere bei hoher Umformgeschwindigkeit, ist eine Beschleunigungskraft insbesondere des Umformwerkzeugs bzw. des Gegenwerkzeugs oder beider. Alternativ kann eine Kraft an anderen Stellen des Werkzeugs oder an Teilen gemessen werden, die zum Antrieb eines der Werkzeuge dienen. Dann gehen die Beschleunigungskräfte der Teile bis zu der Umformstelle in die gemessene Kraft ein. Da im Allgemeinen bekannt ist, welche Masse diese Teile haben, und auch die Beschleunigungen bekannt sind, können die Beschleunigungskräfte durch Multiplikation dieser beiden Größen berechnet und von der gemessenen Kraft abgezogen werden. Auf diese Weise wird die Umformkraft zumindest angenähert, und im optimalen Fall die Umformkraft mit guter Genauigkeit wiedergegeben, sodass diese im Regelprozess als Kraftistwert $F_i$ verwendet werden kann.

In einer weiteren Ausführungsform des Verfahrens kann die oben diskutierte mitgemessene Beschleunigungskraft vermieden werden, indem eine die Umformkraft umfassende Kraft oder eine von der Umformkraft anderweitig abgeleitete Größe gemessen werden, während die Bewegungseinrichtung eine Bewegung mit konstanter Geschwindigkeit durchführt. Damit geht im Allgemeinen eine konstante Geschwindigkeit des Umformwerkzeugs und des Gegenwerkzeugs einher. Ist dies nicht der Fall, kann gemessen werden, während das Umformwerkzeug bzw. das Gegenwerkzeug eine Bewegung mit konstanter Geschwindigkeit durchführt. Eine direkte Messung der Umformkraft unmittelbar oder nahe an der Umformstelle ist ebenfalls denkbar und möglich. In den genannten Fällen misst ein Kraftmessmittel für diese Messung nur geringe Beschleunigungskräfte mit und die gemessene Kraft entspricht weitgehend der Umformkraft.

Zusätzlich zu der Vermeidung oder Kompensation von Beschleunigungskräften können konstante Kräfte, wie etwa Reibungskräfte oder dgl. durch einen subtraktiven Korrekturterm berücksichtigt und von der gemessenen Kraft abgezogen werden, um zu einer möglichst genauen Umformkraft zu kommen.

In einer weiteren Ausführungsform des Verfahrens wird eine Eigenschaft des Rohmaterials, insbesondere eine biegewiderstanderzeugende Dicke des Rohmaterials, aus der Umformkraft oder einer davon abhängigen Größe bestimmt. Eine entsprechende Zuordnung kann für den Umformprozess beispielsweise durch Versuche mit verschiedenen Materialdicken und entsprechend auftretenden Kräften bei bestimmten Umformpositionen $y_{RS}$ ermittelt werden. Alternativ oder zusätzlich kann die Geometrie der Umformvorrichtung und/oder der Umformprozess z.B. mit Finite-Elemente-Methoden simuliert und auf diese Weise eine Zuordnung gewonnen werden. Vorzugsweise wird bei der Ermittlung der Materialdicke die Steifigkeit der Umformvorrichtung und des Werkstücks berücksichtigt, da die Dehnung von Teilen der Umformvorrichtung unter der Umformkraft in die rechnerische Bestimmung der Materialdicke aus der Umformkraft eingehen kann. Alternativ kann die Dicke des Materials auch gemessen werden. Dann kann statt der Krafteinflussregelung eine direkte Ausregelung von Schwankungen der Materialdicke durch Rückkopplung von Dickenmesswerten auf die Stellgröße auf analoge Weise die unten beschriebene Temperaturregelung vorgenommen werden, wobei ein Dickenreferenzwert die Referenztemperatur und eine Dickenkompensationsregelkonstante die Temperaturkompensationsregelkonstante ersetzt.

Im Zusammenhang mit der Erfindung sind insbesondere Werkstücke interessant, bei denen nicht nur ein Umformschritt zum Erreichen der endgültigen Form, sondern mehrere Umformschritte oder gar Umformprozesse vorgesehen sind. In einem solchen Fall ist es in einer weiteren Ausführungsform denkbar, Informationen über Eigenschaften des Rohmaterials oder der Umformvorrichtung, die während eines früheren Umformschrittes oder Umformprozesses gewonnen wurden, in einem späteren Umformschritt des selben Umformprozesses oder in einem späteren Umformprozess zu berücksichtigen. Auf diese Weise ist in dem späteren Umformschritt/Umformprozess weniger Regelaufwand erforderlich, um dabei ein akzeptables Ergebnis zu erreichen. Es ist denkbar, dass mehrere Umformungen des Werkstücks während eines einzigen Bewegungsvorgangs der Bewegungseinrichtung stattfinden können. Die Lehre dieser Ausführungsform kann auch hierauf angewendet werden.

In einer weiteren Ausführungsform des Verfahrens wird zur Berechnung der Stellgröße $y_{RS}$ im Falle einer Analogregelung der integrative Term

$$k_i \cdot \int \left( y_{Soll} - y_{Ist} \right)$$

verwendet oder im Falle einer Digitalregelung der Term

$$k_i \cdot \sum_{i}^{i-N_I} \left( y_{Soll} - y_{Ist}^{i-1} \right)$$

verwendet, der ebenfalls einen integrativen Charakter hat. $Y_{Soll}$ ist dabei ein Sollwert für die geometrische Eigenschaft des Werkstücks, die geregelt werden soll. $y_{Soll}$ liegt typischerweise in einem Toleranzband für diese geometrische Eigenschaft. Besonders bevorzugt liegt $y_{Soll}$ nahe der Mitte des Toleranzbandes. $y_{Ist}$ bzw. $y_{Ist}^{i-1}$ ist ein Istwert der geometrischen Eigenschaft des Werkstücks, der zur Eingabe in die Regelung gemessen wurde. Der Zeitpunkt der Messung liegt vor der Eingabe in die Regelung. Die Messung aller in der Integration bzw. Aufsummierung verwendeten Werte kann an dem Werkstück stattfinden, das aktuell umgeformt wird, wodurch eine Regelung des aktuellen Umformprozesses ermöglicht wird. Alternativ können die so verwendeten Istwerte $y_{Ist}$ bzw. $y_{Ist}^{i-1}$ von mehreren Werkstücken stammen, die vor dem aktuell umzuformenden Werkstück umgeformt wurden. Dabei ist i ein Parameter, der verschiedene Werkstücke bezeichnet, wobei die Werkstücke mit abnehmendem i weiter in der Vergangenheit umgeformt wurden. Die Aufsummierung beginnt somit bei dem Werkstück, das vor der aktuellen Umformung umgeformt wurde. Das Ende der Aufsummierung wird durch die Größe $N_I$ festgelegt, die die Anzahl der aufzusummierenden Istwerte $y_{Ist}$ bzw. $y_{Ist}^{i-1}$ aus der Vergangenheit festlegt, $k_i$ ist eine Integralanteil-Regelkonstante, die das Ausmaß des Einflusses des Integralanteils bei der Regelung der geometrischen Eigenschaft des Werkstücks einstellt. Dieser Integralanteil kann der einzige Term sein, aus dem die Umformposition $y_{RS}$ als Stellgröße berechnet wird, oder er kann einer von mehreren Termen zur Berechnung von $y_{RS}$ sein.

In einer weiteren Ausführungsform des Verfahrens wird die Stellgröße $y_{RS}$ im Falle einer Analogregelung der proportionale Term

$$k_p \cdot \left( y_{Soll} - y_{Ist} \right)$$

oder im Falle einer Digitalregelung der proportionale Term

$$k_p \cdot \left( y_{Soll} - y_{Ist}^{i-1} \right)$$

verwendet. Insbesondere ergänzt dieser Term den Integralterm der vorangegangenen Ausführungsform. Während für $y_{Soll}$ und $y_{Ist}$ bzw. $y_{Ist}^{i-1}$ das bezüglich der vorangehend beschriebenen Ausführungsform Gesagte ebenfalls gilt, ist $k_p$ eine Proportionalanteil-Regelkonstante. Diese legt das Ausmaß des Einflusses des Proportionalanteils auf die Umformposition $y_{RS}$ als Stellgröße fest. Außerdem passt sie die Dimension der zu regelnden geometrischen Eigenschaft des Werkstücks an die Dimension der Stellgröße $y_{RS}$ an.

In einer weiteren Ausführungsform des Verfahrens geht der Istwert $y_{Ist}$ bzw. $y_{Ist}^{i-1}$ als ein Messwert ein, der bei der aktuellen Umformung eines Werkstücks erfasst wird. Dadurch kann, wie oben dargelegt, der Umformprozess während seiner Durchführung geregelt werden.

In einer weiteren Ausführungsform des Verfahrens geht der Istwert $y_{Ist}^{i-1}$ als ein Messwert ein, der bei einer Umformung des Werkstücks vor der Umformung des aktuellen Werkstücks erfasst wurde. Der Messwert kann auch, insbesondere für eine Analogregelung, dauerhaft gemessen und in die Regelung eingegeben werden. Auf diese Weise kann der Umformprozess über eine Vielzahl von Umformprozessen hinweg geregelt werden. Somit können sich verändernde Einflüsse auf den Prozess ausgeregelt werden. Bevorzugt ist der Istwert $y_{Ist}^{i-1}$

dabei ein Endwert der geometrischen Eigenschaft des Werkstücks, der nach der Umformung vorliegt. Der Ist-wert $y_{Ist}^{i-1}$ wird bis zur Erfassung des nächsten Istwerts $y_{Ist}^{i-1}$ gehalten bzw. gespeichert.

In einer weiteren Ausführungsform des Verfahrens wird eine Optimierungsmethode verwendet, um wenigstens einen der Regelparameter $k_p$, $k_i$ und/oder $k_f$ zu ermitteln. Dazu wird eine Simulation von wenigstens einem Teil des Umformvorgangs angewendet. Ein solcher Teil kann beispielsweise ein Abschnitt des Umformprozesses sein, in dem eine geometrische Eigenschaft des Werkstücks durch Umformen erzeugt wird, insbesondere eine geometrische Eigenschaft, die eine Toleranz einhalten muss. In die Simulation werden als Startparameter die zu optimierenden Regelparameter $k_p$, $k_i$ und/oder $k_f$ eingegeben. Optional wird zusätzlich ein zulässiges Toleranzband als Startparameter eingegeben. Das Toleranzband kann zur automatischen Beurteilung des Ergebnisses der Simulation dienen, nämlich die Beurteilung, ob die gemäß der Simulation erzeugte geometrische Eigenschaft des Werkstücks oder eine Streubreite davon innerhalb des Toleranzbands liegt oder nicht.

in einer weiteren Ausführungsform des Verfahrens wird die Parameteroptimierung wenigstens eines zu optimierenden Regelparameters $k_p$, $k_i$ und/oder $k_f$ mit mehreren Schritten durchgeführt. Zunächst werden in das Simulationsmodell Vorgabewerte für die zu optimierenden Regelparameter eingelesen. Dann wird eine Simulation durchgeführt und die Regelparameter darin angewendet. Sodann wird festgestellt, ob das Simulationsergebnis bezüglich jeder geometrischen Eigenschaft des Werkstücks in deren Toleranzband liegt. In einer Variante wird nicht nur ein Umformprozess, sondern mehrere aufeinander folgende gleichartige Simulationsprozesse simuliert. Dann kann auch eingeschätzt werden, wie sich der Umformprozess bzw. die damit erzeugte geometrische Eigenschaft des Werkstücks an das Toleranzband annähert und wieviel Ausschuss dabei entsteht. Außerdem kann die Streubreite der geometrischen Eigenschaft ermittelt werden. Falls das Toleranzband nicht erreicht wird, kann der eine oder die mehreren zu optimierenden Regelparameter variiert und die Simulation und der Vergleich mit dem Toleranzband wiederholt werden. Dies kann so lange fortgesetzt werden, bis brauchbare Regelparameter gefunden sind. Dabei kann die Variation zu größeren wie zu kleineren Werten vorgenommen werden, und das Ausmaß der Änderung durch die Variation angepasst werden. Insbesondere kann die Variation der Regelparameter von der Differenz zwischen der zuletzt als Ergebnis der Simulation erhaltenen geometrischen Eigenschaft des Werkstücks und einer Grenze oder der Mitte des Toleranzbands abhängig gemacht werden. Wenn die simulierte geometrische Eigenschaft des Werkstücks akzeptabel ist, können die zu dieser Simulation verwendeten Regelparameter für den realen Umformprozess eingesetzt werden. Die Beurteilung, ob eine geometrische Eigenschaft akzeptabel ist, kann automatisiert durchgeführt werden. Beispielsweise kann als Kriterium dienen, dass keine simulierte geometrische Eigenschaft außerhalb des Toleranzbands oder außerhalb eines Bandes mit der halben Breite und um die Mitte des Toleranzbandes liegt.

In einer weiteren Ausführungsform des Verfahrens wird zur Berechnung der Stellgröße $y_{RS}$ der Temperaturkompensationsterm

$$ k_T \cdot \left( T_{Ref} - T_{Ist} \right) $$

verwendet. Darin ist $T_{Ist}$ ein Messwert einer Temperatur der Umformvorrichtung, $T_{Ref}$ ein Temperaturreferenzwert, der in einem gleichartigen Messvorgang wie der Temperaturistwert vor dem Temperaturistwert gemessen wurde. $k_p$ ist eine Temperaturkompensationsregelkonstante, die das Ausmaß des Einflusses des Temperaturkompensationsterms auf die Stellgröße $y_{RS}$ einstellt sowie die Dimension Temperatur in die Dimension der Stellgröße $y_{RS}$ umwandelt. Optimalerweise hat die Umformvorrichtung bei der Referenztemperatur eine Geometrie, die keine Korrektur bezüglich Temperatur erfordert. Wenn jedoch weitere Korrekturparameter vorhanden sind, etwa eine Regelung der geometrischen Eigenschaft des Werkstücks durch Messung dieser Eigenschaft und Rückkopplung über einen Integral- und evtl. einen zusätzlichen Proportionalterm auf die Stellgröße $y_{RS}$, so kann diese Regelung auch einen Fehler ausregeln, der bei einer ausschließlichen Temperaturkompensation durch eine fehlererzeugende Geometrie der Umformvorrichtung bei der Referenztemperatur entstehen würde. Die Temperaturregelung kann kontinuierlich während eines Umformvorgangs oder zeitlich punktuell durchgeführt werden. Wenn die Regelung anderer Einflussgrößen ebenfalls durchgeführt wird, wird die Temperaturregelung vorzugsweise im gleichen Rhythmus wie die anderen Regelungen durchgeführt. Auf diese Weise wird jedesmal eine durch aktuelle Korrekturen optimierte Stellgröße $y_{RS}$ ermittelt. Es ist auch denkbar, zur Temperaturkompensation mehrere Temperaturkompensationsterme auf die Stellgröße $y_{RS}$ auf dieselbe Weise wie oben beschrieben zurückzukoppeln. So können mehrere erfasste Temperaturen der Umformvorrichtung einzeln berück-sichtigt werden, was zu einer genaueren Temperaturkompensation führt.

In einer weiteren Ausführungsform des Verfahrens fließt in die Berechnung der Stellgröße $y_{RS}$ ein Relaxationskompensationsterm $y_{Rlx}$ ein. Dieser Term wird zur Kompensation der Relaxation von $y_{RS}$ subtrahiert oder addiert. Unter Relaxation wird dabei eine Veränderung der geometrischen Eigenschaft des Werkstücks verstanden, die nach Umformung des Werkstücks eintritt. Dies kann eine Rückfederung sein, die durch den elastischen Anteil in der Verformung bedingt ist, oder eine langsame Rückverformung, die zeitlich verzögert nach der Herstellung des Werkstücks einsetzen kann. In vielen Fällen ist die dadurch eintretende Abweichung von einer Sollgeometrie des Werkstücks konstant. In diesen Fällen ist es dadurch ausreichend, einen konstanten Term in die Umformposition als Stellwert $y_{RS}$ einfließen zu lassen. Dies gilt ganz besonders, wenn die Umformposition als Stellgröße $y_{RS}$ eine maximale Annäherung oder Entfernung von Werkzeug und Gegenwerkzeug beschreibt. In alternativen Fällen kann sich die geometrische Eigenschaft durch die genannte Korrektur vorteilhaft verbessern.

In einer weiteren Ausführungsform des Verfahrens werden der Steuereinrichtung zur Anpassung an ein Werkstück, das mit der Umformvorrichtung umgeformt werden soll, Regelparameter übergeben, die für die Umformung des Werkstücks geeignet sind. Als Regelparameter gelten hierbei der Relaxationskompensationsterm $y_{Rlx}$, die Temperaturregelkonstante $k_T$, die Integralanteil-Regelkonstante $k_i$, die Proportionalanteil-Regelkonstante $k_p$, der Krafteinfluss-Regelparameter $k_f$, die Anzahl der zu addierenden Differenzen aus $y_{Soll}$ und $y_{Ist}$ im Sinne einer Integration $N_I$, die Anzahl der aufzusummierenden Werte der Umformkraft oder einer davon abhängigen Größe vorangegangener Umformprozesse $N_F$ sowie optional ein Sollwert $y_{Soll}$ für die gewünschte geometrische Eigenschaft des Werkstücks. Unter Umständen können noch weitere, für den Umformprozess relevante Größen in die Steuereinrichtung eingelesen werden.

In einer weiteren Ausführungsform des Verfahrens wird die geometrische Eigenschaft des Werkstücks mittels eines digitalen Regelverfahrens geregelt. Dies ist für alle vorbeschriebenen Ausführungsformen denkbar.

In einem weiteren Aspekt der Erfindung wird eine Vorrichtung zur Durchführung eines Umformungsprozesses gemäß einem Verfahren nach einer der oben genannten Ausführungsformen vorgeschlagen, wobei die Vorrichtung eine Umformvorrichtung umfasst, die eine Steuereinrichtung, wenigstens ein Umformwerkzeug und wenigstens ein Gegenwerkzeug zum Umformen eines Werkstücks aus einem Rohmaterial, sowie eine Bewegungseinrichtung zur Bewegung des Umformwerkzeugs und des Gegenwerkzeugs relativ zueinander umfasst, wobei die Steuereinrichtung dazu bestimmt und eingerichtet ist, die Bewegungseinrichtung mit einer Stellgröße $y_{RS}$ anzusteuern, derart, dass das Umformwerkzeug und/oder das Gegenwerkzeug zur Bewegung in eine Umformposition oder zum Erreichen einer Umformkraft angetrieben wird, um das Werkstück durch Beaufschlagung mit dem Umformwerkzeug und dem Gegenwerkzeug mit einer vorgegebenen geometrischen Eigenschaft zu versehen, wobei die Umformvorrichtung Messmittel zur Erfassung wenigstens einer das Erzielen der vorgegebenen geometrischen Eigenschaft des Werkstücks beeinflussenden Größe umfasst und die Steuereinrichtung dazu eingerichtet ist, die Bewegungseinrichtung unter Berücksichtigung der wenigstens einen messtechnisch zu erfassenden Größe, die das Erzielen der vorgegebenen geometrischen Eigenschaft des Werkstücks beeinflusst, zu regeln.

Eine erfindungsgemäße Vorrichtung ist insbesondere in Anspruch 16 angegeben.

Im Folgenden wird die Erfindung beispielhaft anhand der Figuren im Anhang beschrieben, in denen:

Figur 1 ein Werkstück eines Umformprozesses in drei verschiedenen Bearbeitungszuständen zeigt,

Figur 2 einen Regelkreis zur Regelung einer geometrischen Eigenschaft eines Werkstücks $y_{Soll}$ zeigt,

Figur 3 ein Diagramm mit einem Regelverhalten des Regelkreises aus Figur 2 darstellt,

Figur 4 schematisch einen Teil einer Umformvorrichtung mit einer Bewegungseinrichtung zeigt,

Figur 5 ein Ablaufdiagramm eines Optimierungsverfahrens für Regelparameter des Regelkreises zeigt,

Figur 6 einen gegenüber dem Regelkreis aus der Figur 2 um eine Temperaturkompensation erweiterten Regelkreis zeigt, und

Figur 7 das Regelverhalten einer zusätzlichen Temperaturkompensation in dem Regelkreis in Figur 6 zeigt.

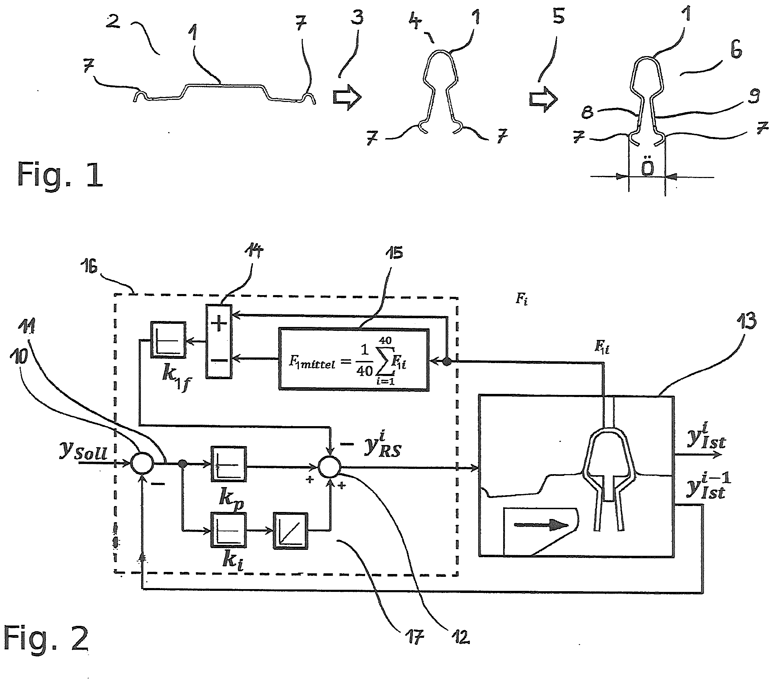

Figur 1 zeigt ein Werkstück 1 eines Umformprozesses in drei verschiedenen Bearbeitungsstufen. Das Werkstück 1 wird aus einem langgestreckten Material, wie etwa einem Bandmaterial oder Draht, als Rohmaterial hergestellt und in einem ersten Umformschritt in das Werkstück 1 in den ersten Bearbeitungszustand 2 umgeformt. In einem zweiten Umformschritt 3 wird das Werkstück 1 durch weiteres Umformen in den zweiten Bearbeitungszustand 4 gebracht. In einem dritten Umformschritt 5 wird das Werkstück 1 nochmals umgeformt und in den dritten Bearbeitungszustand 6 überführt. Eine besonders relevante geometrische Eigenschaft des Werkstücks 1 ist das Öffnungsmaß Ö, dessen Ausprägung in dem dritten Umformschritt 5 erzeugt wird. Die Umformung findet durch Pressen zwischen einem Umformwerkzeug und einem Gegenwerkzeug statt, die durch eine Bewegungseinrichtung aufeinander zu bewegt werden. Die Umformung mit größter Umformkraft findet im ersten Umformschritt statt, indem die Radien in einem Bereich 7 am beiden Rändern des Werkstücks 1 gebogen werden. Hierbei tritt die größte Umformkraft auf, die von einem Kraftsensor in einer Umformvorrichtung für den ersten Umformschritt gemessen wird. In einem entsprechenden Kraftmesswert ist die Information über die Dicke und die Fließgrenze und damit über die erforderliche Umformkraft enthalten. Vorzugsweise wird als relevante Größe die gemessene Maximalkraft herangezogen, die unter Umständen neben der Umformkraft noch weitere Kräfte enthalten kann. Dennoch ist die Umformkraft in der gemessenen Kraft dominierend, so dass sie als Maß für die Dicke und Fließgrenze des Rohmaterials dienen kann. Die gemessene Kraft bzw. Informationen daraus können im dritten Umformschritt 5 verwendet werden, um zu erreichen, dass das Öffnungsmaß Ö in einem vorgegebenen Toleranzband zu liegen kommt.

Figur 2 zeigt einen Regelkreis 16, der zum Erreichen eines Sollwerts $y_{Soll}$ einer geometrischen Eigenschaft des Werkstücks vorgesehen ist. An einer Summationsstelle 10 wird von $y_{Soll}$ ein gemessener Istwert $y_{Ist}^{i-1}$ subtrahiert, um eine Regelabweichung 11 zu erhalten. Der Istwert $y_{Ist}^{i-1}$ ist die geometrische Eigenschaft des Werkstücks, die an dem vorangehend umgeformten Werkstück gemessen wurde. $y_{Ist}^{i-1}$ stellt somit das zuletzt erreichte Ergebnis der Regelung unter dem Einfluss von Schwankungen der Dicke und evtl. der Fließgrenze des Rohmaterials dar. Die Messung der geometrischen Eigenschaft des Werkstücks kann durch ein Messmittel realisiert sein, das beispielsweise optisch nach dem Prinzip eines elektronisch ausgelesenen Profilprojektors arbeitet, oder das das Messergebnis durch das Anmessen von einzelnen Punkten an dem Werkstück 1, z.B. optisch oder mechanisch, jeweils mit elektronischer Auslesung und vorzugsweise geeigneter Differenzbildung der Messergebnisse, erzielt. Vorzugsweise liefert das Messmittel einen Absolutwert als Messergebnis. Vorzugsweise ist das Messmittel für unterschiedliche Werkstücke einsetzbar. Möglicherweise muss es dafür justiert werden, besonders bevorzugt ist dies jedoch nicht erforderlich. Es können Verfahren der Bildverarbeitung eingesetzt werden, insbesondere unter Nutzung eines telezentrischen Objektivs oder vergleichbarer Technik.

Die Regelabweichung 11 wird in einen herkömmlichen digitalen PI-Regler 17 eingegeben, in dem für den Proportionalanteil die Proportionalanteil-Regelkonstante $k_p$, und die Integralanteil-Regelkonstante $k_i$ zur Anwendung kommt. Die Ergebnisse des integralen und des proportionalen Zweigs des Reglers werden an der Summationsstelle 12 addiert, wobei sich die Stellgröße $y_{RS}^i$ ergibt. $y_{RS}^i$ ist eine andersartige Größe als die zu regelnde geometrische Eigenschaft des Werkstücks und ist insbesondere eine dem Umformprozess vorzugebende Umformkraft oder das Ausmaß oder ein Endpunkt einer Zustellbewegung durch eine Bewegungseinrichtung. Der Umformprozess ist in der Figur 2 durch den Block mit der Bezugsziffer 13 repräsentiert. Angedeutet ist darin der dritte Umformschritt 5. Um das Werkstück 1 so zu biegen, dass sich ein Öffnungsmaß Ö ergibt, das innerhalb eines vorgegebenen Toleranzbands liegt, werden in dem dritten Umformschritt zwei Schenkel 8 und 9 des Werkstücks 1 aufeinander zu gebogen. In dem die Regelstrecke darstellenden funktionalen Block 13 ist dies schematisch dargestellt, wobei die Randbereiche 7 mit den Radien nicht gezeigt sind. Als Ergebnis des dritten Umformprozesses ergibt sich ein Öffnungsmaß Ö, das als $y_{IST}^i$ von der Messeinrichtung gemessen wird. Als weiteres Ergebnis der Umformprozesse ergibt sich die Umformkraft $F_{1i}$, die in einem

dem jeweiligen aktuellen Umformschritt vorausgegangenen Umformschritt gemessen wird, wobei bei der Umformkraftmessung unter Umständen die Umformkraft nicht direkt erfasst werden kann, sondern nur überlagert von anderen Kräften, wie etwa mitgemessenen Beschleunigungskräften des Umformwerkzeugs. Je nach Art der Messung kann das Messergebnis auch eine von der Umformkraft abhängige Größe sein. Diese Umformkraft kann die Umformkraft sein, die zur Bestimmung der Dicke und der Fließgrenze als Eigenschaften des Rohmaterials während des ersten Biegeschrittes in Fig. 1 gemessen wurde. Aber auch die im aktuellen Umformschritt (z.B. dem in Fig. 1 gezeigten dritten Umformschritt 5) gemessene Umformkraft kann im Regelungsprozess berücksichtigt werden, etwa gemäß Anspruch 6 und Anspruch 7. $F_{1i}$ wird über einen weiteren Rückkopplungszweig in den Regelkreis zurückgekoppelt. Dabei wird $F_{1i}$ in eine Summationsstelle 14 und in eine Einrichtung zur Mittelwertbildung 15 eingegeben. An der Summationsstelle 14 wird die Differenz zwischen dem aktuellen Messwert $F_{1i}$ und einem Mittelwert $F_{1mittel}$ gebildet. Die Einrichtung zur Mittelwertbildung 15 verwendet Messwerte aus vergangenen Umformprozessen, die an derselben Stelle im Vorgang des Umformprozesses gemessen wurden wie $F_{1i}$, und bildet aus diesen einen Mittelwert. Beispielsweise kann der Mittelwert aus den letzten 40 Kraftmesswerten gebildet werden. Die Kraftmesswerte können an der Stelle im Umformprozess gemessen sein, an der auch die gemessenen Werte $F_{1i}$ in der aktuellen Umformung gemessen wurde. Der Mittelwert bildet in einem gemittelten Wert Rohmaterialeigenschaften aus der unmittelbaren Vergangenheit ab. Somit wird an der Summationsstelle 14 eine große Differenz gebildet, wenn eine plötzliche Abweichung des aktuellen Wertes $F_{1i}$ von dessen Mittelwert in der Vergangenheit vorliegt. Auf diese Weise werden schnelle Schwankungen der Rohmaterialeigenschaften für eine schnelle Regelung des aktuellen Umformprozesses verfügbar gemacht, sodass kein Ausschuss entsteht. Eine Regelung der geometrischen Werkstückeigenschaft mittels einer nach der vorangehenden Umformung gemessenen geometrischen Eigenschaft des letzten Werkstücks könnte dies allein nicht leisten, da es unter Umständen mehrere Umformprozesse an aufeinanderfolgenden Werkstücken dauern würde, bis die Störung ausgeregelt wäre. Die in der Summationsstelle 14 gebildete Differenz wird mit dem betreffenden Krafteinflussfaktor $k_{1f}$ gewichtet und geht sodann in den Punkt 12 der Erzeugung der Stellgröße $y_{RS}^i$ ein. Somit kann bewirkt werden, dass durch den Umformprozess 13 auch bei plötzlichen Schwankungen von Rohmaterialeigenschaften die erzeugte geometrische Eigenschaft $y_{IST}^i$ des Werkstücks innerhalb des Toleranzbands liegt. Bei der gezeigten Ausführungsform verarbeitet die Einrichtung zur Mittelwertbildung nicht die aus dem dritten Umformschritt erhaltenen Werte $F_{1i}$, sondern die aus dem ersten Umformschritt, und dort insbesondere Werte $F_{1i}$, die bei der Erzeugung der Radien an den Randbereichen 7 des Werkstücks 1 gemessen werden, insbesondere die dabei auftretenden Maximalkräfte. Die Kräfte, die bei der Erzeugung der Radien bei den Bereichen 7 auftreten, sind hoch und daher gut messbar. Die Genauigkeit ist somit höher, was sich auf die Regelgüte des Regelkreises 16 auswirkt.

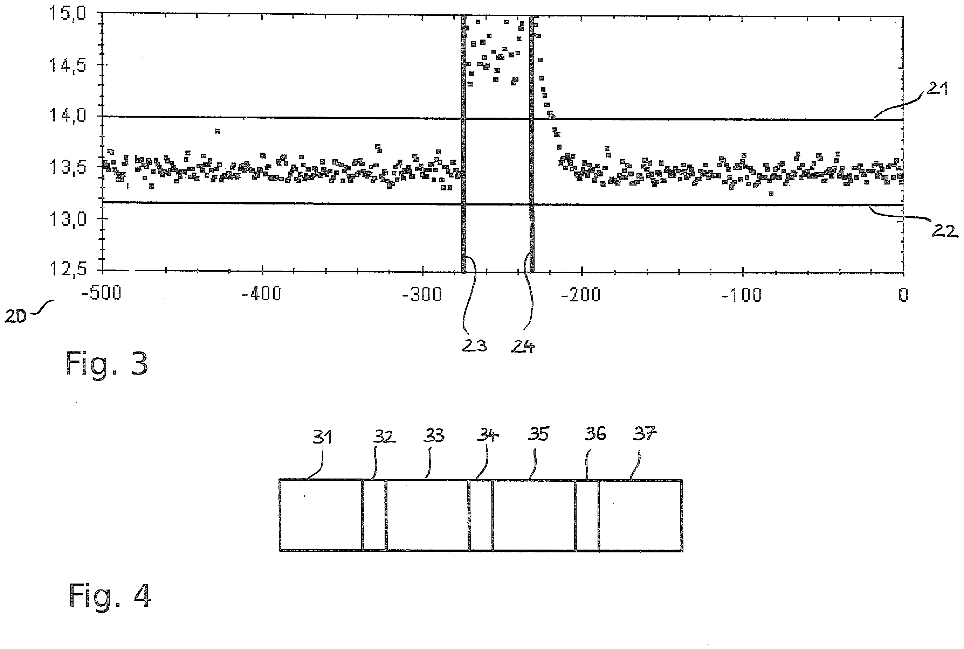

Figur 3 zeigt das Regelverhalten des Regelkreises 16 in einem Diagramm 20, in dem auf der Ordinate die zu erzeugende geometrische Eigenschaft des Werkstücks, nämlich das Öffnungsmaß Ö, und auf der Abszisse die Nummer des hergestellten Werkstücks abgetragen ist. In waagerechter Richtung sind eine obere Grenze 21 eines Toleranzbandes und eine untere Grenze 22 des Toleranzbandes als Linien eingezeichnet. Das aktuelle hergestellte Werkstück ist mit der Nummer 0 auf der Ordinate bezeichnet, so dass die zuvor hergestellten Werkstücke negative Nummern tragen. Die zwischen den Nummern -500 und etwa -275 gezeigte Verteilung der geometrischen Eigenschaft liegt zwischen der oberen Grenze 21 und der unteren Grenze 22 des Toleranzbandes. Dies bedeutet, dass kein Ausschuss produziert wurde. An der mit einer ersten senkrechten Linie 23 bezeichneten Stelle im Ablauf des kontinuierlichen Fertigungsprozesses wurde die Regelung probehalber ausgeschaltet. In dem Bereich von etwa dem Werkstück -275 und -230 liegen daher die erzeugten geometrischen Eigenschaften der Werkstücke außerhalb des Toleranzbandes 21, 22. An der mit der senkrechten Linie 24 bezeichneten Stelle im Ablauf der Produktion wurde die Regelung wieder eingeschaltet. Danach ergab sich ein schnelles Konvergieren der geometrischen Eigenschaft des Werkstücks in den Toleranzbereich, wo sie sodann verblieb.

Figur 4 zeigt schematisch einen Aufbau eines Teils einer Umformvorrichtung mit einer Bewegungseinrichtung. Es sind ein Motor 31, ein Sensor für die Motorstellung oder das Ausmaß einer aus der Motordrehung erzeugten Linearbewegung erfasst, ein Getriebe 33, einen Kraftsensor 34, ein Umformwerkzeug 35, das Werkstück 36 und ein Gegenwerkzeug 37 umfasst, gezeigt. Das Werkstück 36 befindet sich somit zwischen dem Umformwerkzeug 35 und dem Gegenwerkzeug 37 und wird von diesen umgeformt. Die Kraft und die Bewegung dazu werden durch den Motor 31 erzeugt, wobei das Getriebe 33 die Motordrehung in eine Linearbewegung umsetzt. Zwischen dem Umformwerkzeug 35 und dem Getriebe 33 ist der Kraftsensor 34 angeordnet, der die von dem Getriebe 33 auf das Umformwerkzeug 35 übertragenen Kräfte misst. Das Gegenwerkzeug 37 ist mit einer nicht dargestellten Kraftrückleitungseinrichtung verbunden, die die Umformkräfte von dem Gegenwerkzeug 37 zu dem Getriebe 33 leitet. Alternativ kann der Kraftsensor 34 auch zwischen dem Gegenwerkzeug 37 und der Kraftrückleitungseinrichtung oder in der Kraftrückleitungseinrichtung oder zwischen der Kraftrückleitungseinrichtung und dem Getriebe 33 angeordnet sein.

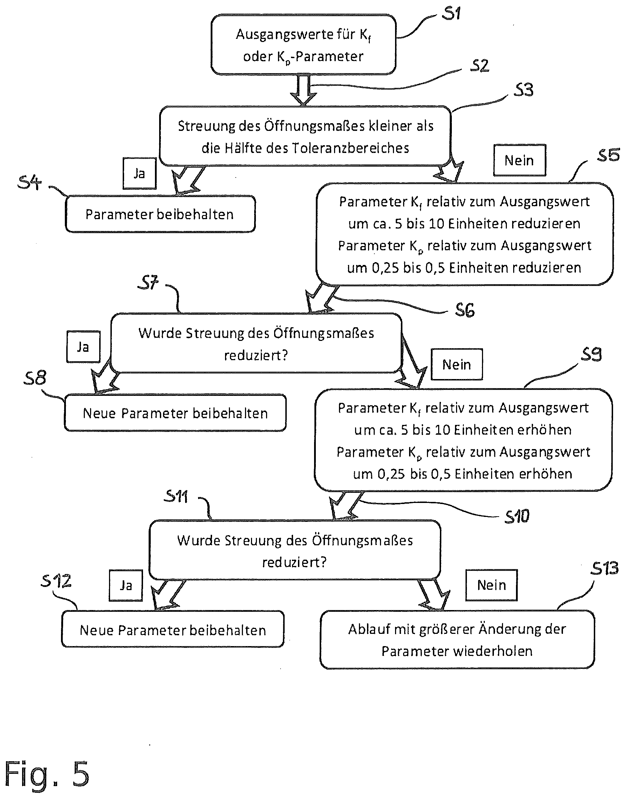

Figur 5 zeigt den Ablauf eines Verfahrens zur Optimierung des betreffenden Krafteinflussparameters $k_f$ und des Proportionalanteil-Regelparameters $k_p$. In einem Schritt S1 werden Ausgangswerte für die beiden genannten Parameter in das Optimierungsverfahren eingegeben. Sodann wird eine Simulation S2 des Umformprozesses ausgeführt, die zu einem Simulationsergebnis für das Öffnungsmaß Ö führt. Dies wird für eine Produktion mehrerer Werkstücke durchgeführt. Im Schritt S3 wird entschieden, ob die Streuung der simulierten Öffnungsmaße geringer als die Hälfte des auch als Toleranzbereich bezeichneten Toleranzbandes ist. Wenn dies der Fall ist, werden in einem Schritt S4 die oben genannten Parameter für die reale Produktion verwendet. Geht die Streuung über einen Bereich hinaus, der die halbe Breite des Toleranzbandes aufweist und um die Mitte des Toleranzbandes herum angeordnet ist, so wird jeweils eine Reduzierung der Parameter kf und kp in einem Schritt S5 durchgeführt. Sodann wird in einem Vorgang S6 wiederum eine Simulation einer Produktion mit dem Umformprozess durchgeführt. Daraufhin wird in dem Schritt S7 ein Vergleich zwischen dem Ergebnis der Simulation S2 und der Simulation S6 gezogen. Wenn, wie in dem Schritt S3 die Streuung des Öffnungsmaßes auf weniger als die Hälfte der Breite des Toleranzbandes reduziert wurde, werden die veränderten Parameter in dem Schritt S8 für die reale Produktion verwendet. Ist dies nicht der Fall, wird eine andere Variationsrichtung für die Parameter kf bzw. kp durchgeführt, indem diese in einem Schritt S9 erhöht werden. Sodann wird in einer weiteren Simulation S10 die Produktion mit dem Umformprozess simuliert. Danach wird in einem Schritt S11 wie in den Schritten S3 und S7 ein Vergleich zwischen den erhaltenen Simulationsergebnissen und den Ergebnissen der Simulation S2 gezogen. Wenn die Steuerung des Öffnungsmaßes auf weniger als die Hälfte der Breite des Toleranzbandes reduziert wurde, werden die veränderten Parameter in einem Schritt S12 für die reale Produktion verwendet. Wurde die Streubreite der simulierten Öffnungsmaße nicht auf weniger als die halbe Breite des Toleranzbandes verringert, so wird der in Figur 5 gezeigte Vorgang mit größeren Änderungen der Parameter wiederholt.

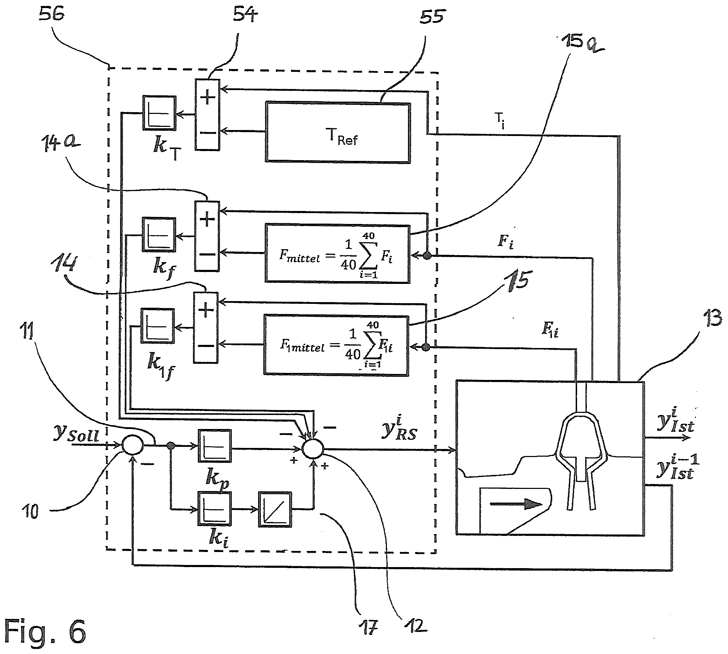

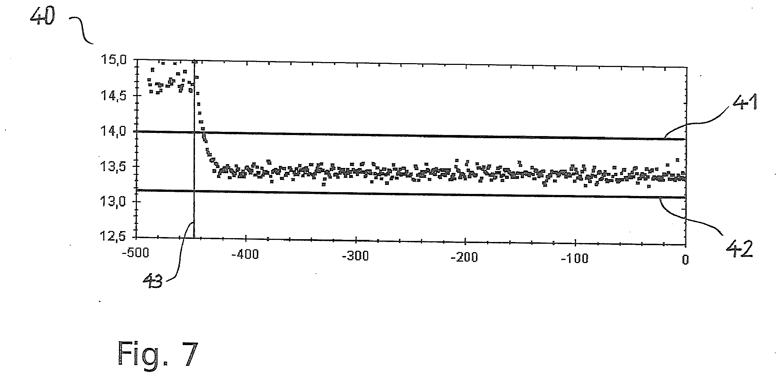

In der Figur 6 ist ein gegenüber der Figur 2 erweiterter Regelkreis 56 dargestellt. Die Teile des Regelkreises 56, die mit dem Regelkreis 16 aus der Figur 2 identisch sind, tragen die gleichen Bezugsziffern, und es sei diesbezüglich auf die Beschreibung der Figur 2 verwiesen. Zusätzlich umfasst der Regelkreis 56 einen weiteren Rückkopplungszweig, mit dem eine Temperatur $T_i$ aus der Umformvorrichtung in die Regelung zurückgekoppelt wird. Die Temperatur $T_i$ wird dabei mit einem Temperaturmessmittel vorzugsweise an einer Stelle in der Umformvorrichtung gemessen, deren thermische Ausdehnung besonders starke Auswirkungen auf die Position des Umformwerkzeugs bzw. des Gegenwerkzeugs bzw. auf deren maximale Annäherung oder Entfernung hat. Dies kann kontinuierlich stattfinden, oder ein oder mehrmals pro Umformvorgang. Die gemessene Temperatur T, wird in einer Summationsstelle 54 des Temperaturrückkopplungszweiges eingegeben. In die Summationsstelle 54 wird außerdem eine Referenztemperatur 55 eingegeben, die vorzugsweise an der selben Messstelle wie die Temperatur $T_i$ in der Umformvorrichtung zu einem früheren Zeitpunkt gemessen wurde. Optimalerweise ist zu diesem früheren Zeitpunkt die thermische Situation der Umformvorrichtung derart, dass sie ohne Temperaturkompensation optimal funktioniert. Dies ist jedoch nicht zwingend erforderlich, da eine Anfangsabweichung der Geometrie der Umformvorrichtung auch durch den PI-Regler 17 für die geometrische Eigenschaft des Werkstücks aus geregelt werden kann. Die an der Summationsstelle 54 erzeugte Differenz von $T_{ref}$ und $T_i$ wird über eine Temperaturregelkonstante $k_T$ gewichtet und die Dimension der Temperatur in die Dimension der Stellgröße $y_{RS}$ umgewandelt. Das so erzeugte Signal wird in die Summationsstelle 12 eingespeist und beeinflusst auf diese Weise die Stellgröße $y_{RS}$ als negative Rückkopplung. Schwankungen der Temperatur der Umformeinrichtung können somit ausgeregelt werden, wie in der Figur 7 detailliert gezeigt ist. Mit eingezeichnet ist in Figur 6 ein optionaler Rückkopplungszweig, mit dem die Umformkraft $F_i$ im aktuellen (dritten) Umformschritt in die Regelung zurückgekoppelt wird. Dies erfolgt ähnlich wie bei der Umformkraft $F_{1i}$, wobei die betreffende Summationsstelle mit 14a und der Mittelwertbilder mit 15a bezeichnet ist.

Figur 7 zeigt ein Diagramm 40, das das Einregeln einer geometrischen Eigenschaft eines Werkstücks mit einer gegenüber dem Regelkreis 16 um eine Temperaturkompensation erweiterten Regelung 56 darstellt. In dem Diagramm sind auf der Ordinate das Öffnungsmaß Ö, und, wie in der Figur 3, auf der Abszisse die Nummern von nacheinander hergestellten Werkstücken abgetragen. Die obere Grenze 41 und die untere Grenze 42 des Toleranzbandes sind als waagerechte Linien in das Diagramm 40 eingezeichnet. In dem Diagramm 40 ist dargestellt, wie sich nach dem Einschalten einer Temperaturregelung bei bis auf die Temperatur konstanten Bedingungen des Umformprozesses das Öffnungsmaß Ö in das Toleranzband einregelt. Die Temperaturkompensationsregelung wurde bei etwa dem Werkstück -445 eingeschaltet. Die Stelle ist im Diagramm 40 mit der vertikalen Linie 43 bezeichnet. Die Öffnungsmaße der vor dem Einschalten der Temperaturkompensationsregelung hergestellten Werkstücke links von der Linie liegen außerhalb des Toleranzbandes 41, 42. Nach dem Einschalten der Temperaturkompensationsregelung bei der Linie 43 wird das Toleranzband nach der Herstellung von wenigen Werkstücken erreicht und nicht mehr verlassen.

## Patentansprüche

1. Verfahren zur seriellen Durchführung von gleichen Umformprozessen an gleichen Werkstücken aus einem Rohmaterial mittels einer Umformvorrichtung, wobei in jedem Umformprozess mehrere Umformschritte an dem jeweiligen und genau einen Werkstück durchgeführt werden, wobei die Umformvorrichtung eine Steuereinrichtung, wenigstens ein Umformwerkzeug und wenigstens ein Gegenwerkzeug zum Umformen des Werkstücks in einem jeweiligen Umformschritt, sowie eine Bewegungseinrichtung zur Bewegung des jeweiligen Umformwerkzeugs und Gegenwerkzeugs relativ zueinander in dem betreffenden Umformschritt umfasst, wobei zur Durchführung eines einem ersten Umformschritt unmittelbar oder ggf. nach wenigstens einem weiteren Umformschritt folgenden aktuellen Umformschrittes die Bewegungseinrichtung von der Steuereinrichtung mit einer Stellgröße $y_{Rs}$ angesteuert wird, derart, dass ein zur Durchführung des aktuellen Umformschrittes zu bewegendes Umformwerkzeug und/oder das betreffende Gegenwerkzeug zur Bewegung in eine Umformposition oder zum Erreichen einer Umformkraft angetrieben wird, um das Werkstück durch Beaufschlagung mit diesem Umformwerkzeug und dem Gegenwerkzeug mit einer vorgegebenen geometrischen Eigenschaft zu versehen, wobei in jedem Umformschritt nur das genau eine Werkstück zwischen Umformwerkzeug und Gegenwerkzeug platziert wird,

wobei die Steuerung der Bewegungseinrichtung in dem aktuellen Umformschritt unter Berücksichtigung wenigstens einer messtechnisch erfassten Größe, die das Erzielen der vorgegebenen geometrischen Eigenschaft des Werkstücks beeinflusst, erfolgt, wobei die messtechnisch erfasste Größe

- eine mittels der Umformvorrichtung in dem aktuellen Umformschritt auf das Werkstück ausgeübte Umformkraft oder eine davon abhängige Größe oder/und
- eine Temperatur der Umformvorrichtung oder/und
- eine geometrische Eigenschaft des Werkstücks oder/und
- eine geometrische Eigenschaft eines mittels der Umformvorrichtung in einem vorausgegangenen Umformprozess umgeformten Werkstücks ist, und

wobei die Steuerung der Bewegungseinrichtung in dem aktuellen Umformschritt zusätzlich unter Berücksichtigung einer Umformkraft erfolgt, die bei der Umformung des jeweiligen und genau einen Werkstückes in einem dem aktuellen Umformschritt vorausgegangenen Umformschritt desselben Werkstücks gemessen wurde, wobei die Stellgröße $y_{RS}$ unter Verwendung des Krafteinflussterms

$$k_{1f} \cdot (F_{1mittel} - F_{1Ist})$$

ermittelt wird, in welchem $F_{1Ist}$ die bei der Umformung des Werkstückes in einem dem aktuellen Umformschritt vorausgegangenen Umformschritt zu messende und zusätzlich bei der Steuerung der Bewegungseinrichtung zu berücksichtigende Umformkraft oder eine davon abhängige Größe, $F_{1mittel}$ als ein Mittelwert der Umformkraft $F_{1Ist}$oder einer davon abhängigen Größe in dem betreffenden gleichen Umformschritt von vorangegangenen Umformprozessen eingeht und $k_{1f}$ als ein Krafteinflussregelparameter eingeht.

2. Verfahren nach Anspruch 1, wobei der aktuelle Umformschritt der letzte Umformschritt in dem Umformprozess des Werkstücks ist.

3. Verfahren nach Anspruch 1 oder 2, wobei die bei der Umformung des Werkstückes in einem dem aktuellen Umformschritt vorausgegangenen Umformschritt zu messende und zusätzlich bei der Steuerung der Bewegungseinrichtung zu berücksichtigende Umformkraft größer als die im aktuellen Umformschritt aufzubringende Umformkraft ist.

4. Verfahren nach einem der vorhergehenden Ansprüche, **dadurch gekennzeichnet, dass** die Stellgröße $y_{RS}$ als Umformposition eine Position maximaler Annäherung oder Entfernung von Umformwerkzeug und Gegenwerkzeug oder als Kraftvorgabe eine maximale Bewegungskraft oder eine maximale Umformkraft vorgibt.

5. Verfahren nach einem der vorhergehenden Ansprüche, **dadurch gekennzeichnet, dass** Auswirkungen auf die geometrische Eigenschaft des Werkstücks auf Grund von Abweichungen der Geometrie und/oder einer Materialeigenschaft des Rohmaterials und/oder von thermischen Geometrieveränderungen der Umformvorrichtung ausgeregelt werden.

6. Verfahren nach einem der vorhergehenden Ansprüche, **dadurch gekennzeichnet, dass** die Stellgröße $y_{RS}$ unter Verwendung des Krafteinflussterms

$$k_f \cdot (F_{mittel} - F_{Ist})$$

ermittelt wird, in welchem $F_{Ist}$ als eine Umformkraft oder eine davon abhängige Größe im aktuellen Umformschritt eingeht, $F_{mittel}$ als ein Mittelwert der Umformkraft $F_{Ist}$ oder einer davon abhängigen Größe an der gleichen Stelle im Ablauf von vorangegangenen Umformprozessen eingeht und $k_f$ als ein Krafteinflussregelparameter eingeht.

7. Verfahren nach Anspruch 6, **dadurch gekennzeichnet, dass** der Mittelwert $F_{mittel}$ der Umformkraft

oder einer davon abhängigen Größe $F_{Ist}$ gemäß der Formel

$$F_{mittel} = \frac{1}{N_F} \sum_{i=1}^{N_F} \left( F_{Ist}^i \right)$$

ermittelt wird, wobei i = 1 den zuletzt vorangegangenen Umformvorgang bezeichnet und $N_F$ als Anzahl der aufzusummierenden Werte der Umformkraft oder einer davon abhängigen Größe vorangegangener Umformprozesse eingeht.

8. Verfahren nach einem der vorhergehenden Ansprüche, **dadurch gekennzeichnet, dass** der Mittelwert $F_{1mittel}$ der Umformkraft oder einer davon abhängigen Größe $F_{1Ist}$ gemäß der Formel

$$F_{1mittel} = \frac{1}{N_F} \sum_{i=1}^{N_F} \left( F_{1Ist}^i \right)$$

ermittelt wird, wobei i = 1 den zuletzt vorangegangenen Umformvorgang bezeichnet und $N_F$ als Anzahl der aufzusummierenden Werte der Umformkraft oder einer davon abhängigen Größe $F_{1Ist}$ vorangegangener Umformprozesse eingeht.

9. Verfahren nach Anspruch einem der vorhergehenden Ansprüche, **dadurch gekennzeichnet, dass** eine Beeinflussung einer von der Umformkraft abhängigen Größe durch eine mitgemessene Beschleunigungskraft aus einer Beschleunigung eines Teils der Umformvorrichtung verringert oder beseitigt wird, indem eine berechnete oder/und gemessene, wenigstens angenäherte Beschleunigungskraft von der von der Umformkraft abhängigen Größe subtrahiert wird.

10. Verfahren nach einem der Ansprüche 1 bis 8, **dadurch gekennzeichnet, dass** eine Beeinflussung der gemessenen Umformkraft oder einer davon abhängigen Größe durch eine mitgemessene Beschleunigungskraft aus einer Beschleunigung eines Teils der Umformvorrichtung vermieden wird, indem die Umformkraft oder eine davon abhängige Größe $F_{Ist}$ oder $F_{1Ist}$ während einer Phase der Umformung mit konstanter Geschwindigkeit der Bewegungseinrichtung gemessen wird.

11. Verfahren nach einem der vorhergehenden Ansprüche , **dadurch gekennzeichnet, dass**

a) die Stellgröße $y_{RS}$ zur Herbeiführung eines Integralregelverhaltens: im Falle einer Analogregelung unter Verwendung des integrativen Terms

$$k_i \cdot \int \left(y_{Soll} - y_{Ist}\right)$$

oder im Falle einer Digitalregelung unter Verwendung des quasi-integrativen Terms

$$k_i \cdot \sum_{i}^{i-N_I} \left(y_{Soll} - y_{Ist}^{i-1}\right)$$

ermittelt wird, wobei in den Term jeweils ein Messwert einer geometrischen Eigenschaft des Werkstücks als Istwert $y_{Ist}$, $k_i$ als eine Integralanteil-Regelkonstante und $y_{Soll}$ als ein Sollwert für die geometrische Eigenschaft des Werkstücks eingeht und $N_I$ eine Anzahl von zu addierenden Differenzen aus $y_{Soll}$ und $y_{Ist}$ festlegt, oder/und

b) dass die Stellgröße $y_{RS}$ zur Herbeiführung eines Proportionalregelverhaltens:

im Falle einer Analogregelung unter Verwendung des proportionalen Terms

$$k_p \cdot \left(y_{Soll} - y_{Ist}\right)$$

oder im Falle einer Digitalregelung unter Verwendung des Terms

$$k_p \cdot \left(y_{Soll} - y_{Ist}^{i-1}\right)$$

ermittelt wird, wobei in den Term jeweils ein Messwert einer geometrischen Eigenschaft des Werkstücks als Istwert $y_{Ist}$, $k_p$ als eine Proportionalanteil-Regelkonstante und $y_{Soll}$ als ein Sollwert für die geometrische Eigenschaft des Werkstücks eingeht.

12. Verfahren nach einem der Ansprüche 6 bis 11, **dadurch gekennzeichnet, dass** zur Ermittlung wenigstens eines der Regelparameter $k_p$, $k_i$ und/oder $k_f$ eine den Umformvorgang wenigstens teilweise simulierende Optimierungsmethode angewendet wird, in die zu optimierende Regelparameter $k_p$, $k_i$ und/oder $k_f$ und optional ein zulässiges Toleranzband als Startparameter eingehen, wobei die Parameteroptimierung wenigstens eines zu optimierenden Regelparameters $k_p$, $k_i$ oder/und $k_f$ zumindest mit folgenden Schritten durchgeführt wird: Einlesen von Vorgabewerten für die zu optimierenden Regelparameter in einem Simulationsmodell von wenigstens Teilen des Umformprozesses,

Anwenden der zu optimierenden Regelparameter in dem Simulationsmodell, Vergleich der Ergebnisse der Simulation hinsichtlich der Streuung der zu regelnden geometrischen Eigenschaft des Werkstücks mit dem Toleranzband,

- falls die geometrische Eigenschaft der simulierten Werkstücke außerhalb des Toleranzbandes liegt, die Variation wenigstens eines der zu optimierenden Parameter,

Anwenden der variierten zu optimierenden Parameter in dem Simulationsmodell, Vergleich der Ergebnisse der Simulation hinsichtlich der Streuung der geometrischen Eigenschaft des Werkstücks mit dem Toleranzband,

- falls die geometrische Eigenschaft der simulierten Werkstücke außerhalb des Toleranzbandes liegt, die Variation und die nachfolgend genannten Schritte optional wiederholen,
- falls die geometrischen Eigenschaft der simulierten Werkstücke innerhalb des Toleranzbandes liegt, den oder die optimierten Regelparameter für die Regelung des Umformvorgangs verwenden.

13. Verfahren nach einem der vorhergehenden Ansprüche, **dadurch gekennzeichnet, dass** die Umformposition $y_{RS}$ unter Verwendung des Temperaturkompensationsterms

$$k_T \cdot \left(T_{Ref} - T_{Ist}\right)$$

ermittelt wird, in den ein Messwert einer Temperatur der Umformvorrichtung als Temperaturistwert $T_{Ist}$ eingeht, $T_{Ref}$ als ein Temperaturreferenzwert der Umformvorrichtung eingeht und $k_T$ als eine Temperaturkompensationsregelkonstante eingeht.

14. Verfahren nach einem der vorhergehenden Ansprüche, **dadurch gekennzeichnet, dass** die Umformposition $y_{RS}$ unter Verwendung eines Relaxationskompensationsterms $y_{Rlx}$ ermittelt wird, der zur Kompensation der Relaxation von $y_{RS}$ subtrahiert oder dazu addiert wird.

15. Verfahren nach einem der vorhergehenden Ansprüche, **dadurch gekennzeichnet, dass** als Bewegungseinrichtung ein numerisch gesteuerter elektromotorischer Antrieb verwendet wird und als Regelung eine Digitalregelung eingesetzt wird.

16. Vorrichtung zur Durchführung eines mehrstufigen Umformungsprozesses gemäß einem Verfahren nach einem der vorhergehenden Ansprüche, umfassend eine Umformvorrichtung, die eine Steuereinrichtung, wenigstens ein Umformwerkzeug und wenigstens ein Gegenwerkzeug zum Umformen genau eines Werkstücks aus einem Rohmaterial, sowie eine Bewegungseinrichtung zur Bewegung des Umformwerkzeugs und des Gegenwerkzeugs relativ zueinander umfasst, wobei die Steuereinrichtung dazu bestimmt und eingerichtet ist, die Bewegungseinrichtung mit einer Stellgröße $y_{RS}$ anzusteuern, derart, dass das Umformwerkzeug und/oder das Gegenwerkzeug zur Bewegung in eine Umformposition oder zum Erreichen einer Umformkraft angetrieben wird, um das Werkstück durch Beaufschlagung mit dem Umformwerkzeug und dem Gegenwerkzeug mit einer vorgegebenen geometrischen Eigenschaft zu versehen,

wobei die Umformvorrichtung Messmittel zur Erfassung wenigstens einer das Erzielen der vorgegebenen geometrischen Eigenschaft des genau einen Werkstücks beeinflussenden Größe umfasst und dass die Steuereinrichtung dazu eingerichtet ist, die Bewegungseinrichtung unter Berücksichtigung der wenigstens einen messtechnisch zu erfassenden Größe, die das Erzielen der vorgegebenen geometrischen Eigenschaft des genau einen Werkstücks beeinflusst, zu steuern, und wobei die Umformvorrichtung wenigstens einen Krafterfassungssensor zur Messung der Umformkraft in einem aktuellen Umformschritt eines jeweiligen Umformprozesses des genau einen Werkstückes aufweist, wobei die Steuereinrichtung dazu eingerichtet ist, die mittels des Kraftsensors gemessene Umformkraft bei der Steuerung der Bewegungseinrichtung in einem dem aktuellen Umformschritt des genau einen Werkstücks folgenden Umformschritt des Umformprozesses desselben und genau einen Werkstückes zu berücksichtigen, wobei die Stellgröße $y_{RS}$ unter Verwendung des Krafteinflussterms

$$k_{1f} \cdot (F_{1mittel} - F_{1Ist})$$

ermittelt wird, in welchem $F_{1Ist}$ die bei der Umformung des Werkstückes in einem dem aktuellen Umformschritt vorausgegangenen Umformschritt zu messende und zusätzlich bei der Steuerung der Bewegungseinrichtung zu berücksichtigende Umformkraft oder eine davon abhängige Größe, $F_{1mittel}$ als ein Mittelwert der Umformkraft $F_{1Ist}$ oder einer davon abhängigen Größe in dem betreffenden gleichen Umformschritt von vorangegangenen Umformprozessen eingeht und $k_{1f}$ als ein Krafteinflussregelparameter eingeht.

**Claims**

1.  Method for the serial implementation of identical forming processes on identical workpieces made from a raw material by means of a forming apparatus, wherein, in each forming process, a plurality of forming steps are carried out on the particular and exactly one workpiece, wherein the forming apparatus comprises a control device, at least one forming tool and at least one counter-tool for forming the workpiece in a particular forming step, and a movement device for moving the particular forming tool and counter-tool relative to one another in the relevant forming step, wherein, in order to carry out a current forming step which follows a first forming step immediately or optionally after at least one further forming step, the movement device is actuated by the control device using a manipulated variable $y_{Rs}$ in such a way that a forming tool to be moved in order to carry out the current forming step and/or the relevant counter-tool is driven to move into a forming position or to achieve a forming force, in order to provide the workpiece with a predetermined geometric property by acting on it using this forming tool and the counter-tool, wherein, in each forming step, only the exactly one workpiece is placed between the forming tool and counter-tool, wherein the movement device is controlled in the current forming step by taking into account at least one measured variable that influences the achievement of the predetermined geometric property of the workpiece,

    wherein the measured variable is

        - a forming force exerted on the workpiece by the forming apparatus in the current forming step or a variable dependent thereon and/or
        - a temperature of the forming apparatus and/or
        - a geometric property of the workpiece and/or
        - a geometric property of a workpiece formed by the forming apparatus in a previous forming process, and

    wherein the movement device is also controlled in the current forming step by taking into account a forming force which was measured during the forming of the particular and exactly one workpiece in a step of forming said workpiece preceding the current forming step, wherein the manipulated variable $y_{RS}$ is determined using the force influence term

$$k_{1f} \cdot \left(F_{1average} - F_{1actual}\right)$$

in which $F_{1actual}$ is the forming force to be measured during the forming of the workpiece in a forming step preceding the current forming step and also to be taken into account when controlling the movement device, or a variable dependent thereon, $F_{1average}$ is an average value of the forming force $F_{1actual}$ or of a variable dependent thereon in the same relevant forming step of previous forming processes, and $k_{1f}$ is a force influence control parameter.

2. Method according to claim 1, wherein the current forming step is the last forming step in the process of forming the workpiece.

3. Method according to either claim 1 or claim 2, wherein the forming force to be measured during the forming of the workpiece in a forming step preceding the current forming step and also to be taken into account when controlling the movement device is greater than the forming force to be applied in the current forming step.

4. Method according to any of the preceding claims, **characterised in that** the manipulated variable $y_{RS}$ specifies a position of maximum approach or distance of the forming tool and counter-tool as the forming position or specifies a maximum movement force or a maximum forming force as a force specification.

5. Method according to any of the preceding claims, **characterised in that** effects on the geometric property of the workpiece caused by deviations in the geometry and/or a material property of the raw material and/or by thermal changes in geometry of the forming device are corrected.

6. Method according to any of the preceding claims, **characterised in that** the manipulated variable $y_{RS}$ is determined using the force influence term

$$k_f \cdot \left( F_{average} - F_{actual} \right)$$

in which $F_{actual}$ is a forming force or a variable dependent thereon in the current forming step, $F_{average}$ is an average value of the forming force $F_{actual}$ or of a variable dependent thereon at the same point in the sequence of previous forming processes, and $k_f$ is a force influence control parameter.

7. Method according to claim 6, **characterised in that** the average value $F_{average}$ of the forming force or of a variable $F_{actual}$ dependent thereon is determined according to the formula

$$F_{average} = \frac{1}{N_F} \sum_{i=1}^{N_F} \left( F_{actual}^i \right)$$

where i = 1 denotes the last preceding forming process and $N_F$ is the number of values of the forming force to be added together or of a variable of preceding forming processes that is dependent thereon.

8. Method according to any of the preceding claims, **characterised in that** the average value $F_{1average}$ of the forming force or of a variable $F_{1actual}$ dependent thereon is determined according to the formula

$$F_{1average} = \frac{1}{N_F} \sum_{i=1}^{N_F} \left( F_{1actual}^i \right)$$

where i = 1 denotes the last preceding forming process and $N_F$ is the number of values of the forming force to be added together or of a variable $F_{1actual}$ of preceding forming processes that is dependent thereon.

9. Method according to any of the preceding claims, **characterised in that** an influence of a variable dependent on the forming force is reduced or eliminated by a co-measured acceleration force from an acceleration of a part of the forming device, by a calculated and/or measured, at least approximated acceleration force being subtracted from the variable dependent on the forming force.

10. Method according to any of claims 1 to 8, **characterised in that** an influence of the measured forming force or of a variable dependent thereon is prevented by a co-measured acceleration force from an acceleration of a part of the forming device, by the forming force or a variable $F_{actual}$ or $F_{1actual}$ dependent thereon being measured during a phase of the forming at a constant speed of the movement device.

11. Method according to any of the preceding claims, **characterised in that**

a) in order to bring about integral control behaviour, the manipulated variable $y_{RS}$ is determined: in the case of analogue control, using the integrative term

$$k_i \cdot \left( y_{target} - y_{actual} \right)$$

or in the case of digital control, using the quasi-integrative term

$$k_i \cdot \sum_{i}^{i-N_I} \left( y_{target} - y_{actual}^{i-1} \right)$$

where, in the term, a measured value of a geometric property of the workpiece is the actual value $y_{actual}$, $k_i$ is an integral component control constant and $y_{target}$ is a target value for the geometric property of the workpiece, and $N_I$ defines a number of differences from $y_{target}$ and $y_{actual}$ to be added, and/or

b) **in that**, in order to bring about proportional control behaviour, the manipulated variable $y_{RS}$ is determined:

in the case of analogue control, using the proportional term

$$k_p \cdot \left( y_{target} - y_{actual} \right)$$

or in the case of digital control, using the term

$$k_p \cdot \left( y_{target} - y_{actual}^{i-1} \right)$$

where, in the term, a measured value of a geometric property of the workpiece is the actual value $y_{actual}$, $k_p$ is a proportional component control constant and $y_{target}$ is a target value for the geometric property of the workpiece.

12. Method according to any of claims 6 to 11, **characterised in that**, in order to determine at least one of the control parameters $k_p$, $k_i$ and/or $k_f$, an optimisation method which at least partially simulates the forming process is used, in which optimisation method the control parameters $k_p$, $k_i$ and/or $k_f$ to be optimised and optionally a permissible tolerance range are used as starting parameters, the parameter optimisation of at least one control parameter $k_p$, $k_i$ and/or $k_f$ to be optimised being carried out at least by means of the following steps: reading in default values for the control parameters to be optimised in a simulation model of at least parts of the forming process, applying the control parameters to be optimised in the simulation model, comparing the results of the simulation with regard to the variability of the geometric property of the workpiece to be controlled with the tolerance range,

- if the geometric property of the simulated workpieces is outside the tolerance range, varying at least one of the parameters to be optimised,

applying the varied parameters to be optimised in the simulation model, comparing the results of the simulation with regard to the variability of the geometric property of the workpiece with the tolerance range,
- if the geometric property of the simulated workpieces is outside the tolerance range, optionally repeating the variation and the steps listed thereafter,
- if the geometric property of the simulated workpieces is within the tolerance range, using the optimised control parameter(s) to control the forming process.

13. Method according to any of the preceding claims, **characterised in that** the forming position $y_{RS}$ is determined using the temperature compensation term

$$k_T \cdot \left( T_{Ref} - T_{actual} \right)$$

in which a measured value of a temperature of the forming apparatus is the temperature actual value $T_{actual}$, $T_{Ref}$ is a temperature reference value of the forming apparatus, and $k_T$ is a temperature compensation control constant.

14. Method according to any of the preceding claims, **characterised in that** the forming position $y_{RS}$ is determined using a relaxation compensation term $y_{Rlx}$ which is subtracted from or added to $y_{RS}$ to compensate for the relaxation.

15. Method according to any of the preceding claims, **characterised in that** a numerically controlled electromotive drive is used as the movement device and digital control is implemented as the control.

16. Apparatus for carrying out a multi-stage forming process in accordance with a method according to any of the preceding claims, comprising a forming apparatus which comprises a control device, at least one forming tool and at least one counter-tool for forming exactly one workpiece from a raw material, and a movement device for moving the forming tool and the counter-tool relative to one another, wherein the control device is intended and designed to actuate the movement device using a manipulated variable $y_{RS}$ in such a way that the forming tool and/or the counter-tool is driven to move into a forming position or to achieve a forming force, in order to provide the workpiece with a predetermined geometric property by acting on it using the forming tool and the counter-tool,

wherein the forming device comprises measuring means for detecting at least one variable that influences the achievement of the predetermined geometric property of the exactly one workpiece, and the control device is designed to control the movement device by taking into account the at least one variable to be measured which influences the achievement of the predetermined geometric property of the exactly one workpiece, and wherein the forming apparatus has at least one force detection sensor for measuring the forming force in a current forming step of a particular process for forming the exactly one workpiece,

wherein the control device is designed to take into account the forming force measured by means of the force sensor when controlling the movement device in a forming step of the process for forming the exactly one workpiece following the current forming step of the same exactly one workpiece,

wherein the manipulated variable $y_{RS}$ is determined using the force influence term

$$k_{1f} \cdot \left( F_{1average} - F_{1actual} \right)$$

in which $F_{1actual}$ is the forming force to be measured during the forming of the workpiece in a forming step preceding the current forming step and also to be taken into account when controlling the movement device, or a variable dependent thereon, $F_{1average}$ is an average value of the forming force $F_{1actual}$ or of a variable dependent thereon in the same relevant forming step of previous forming processes, and $k_{1f}$ is a force influence control parameter.

## Revendications

1. Procédé pour l'exécution en série de processus de formage identiques sur des pièces à usiner identiques à partir d'un matériau brut au moyen d'un dispositif de formage, dans lequel plusieurs étapes de formage sont exécutées dans chaque processus de formage sur la pièce à usiner respective et exactement unique, dans lequel le dispositif de formage comprend un dispositif de commande, au moins un outil de formage et au moins un contre-outil pour le formage de la pièce à usiner dans une étape de formage respective, ainsi qu'un dispositif de déplacement pour le déplacement de l'outil de formage respectif et du contre-outil l'un par rapport à l'autre dans l'étape de formage concerné, dans lequel, pour l'exécution d'une étape de formage actuelle directement suivant une première étape de formage ou, le cas échéant, après au moins une autre étape de formage, le dispositif de déplacement est commandé par le dispositif de commande avec une grandeur de réglage $y_{RS}$, de telle sorte qu'un outil de formage à déplacer pour l'exécution de l'étape de formage actuelle et/ou le contre-outil concerné est entraîné pour se déplacer dans une position de formage ou pour atteindre une force de formage, afin de doter la pièce à usiner d'une propriété géométrique prédéfinie en la soumettant à cet outil de formage et au contre-outil, dans lequel dans chaque étape de formage, ladite exactement une pièce à usiner est placée entre l'outil de formage et le contre-outil, dans lequel la commande du dispositif de déplacement dans l'étape de formage actuelle s'effectue en tenant compte d'au moins une grandeur détectée par la technique de mesure qui influence l'obtention de la propriété géométrique prédéfinie de la pièce à usiner, dans lequel la grandeur détectée par la technique de mesure est

- une force de formage exercée sur la pièce à usiner au moyen du dispositif de formage dans l'étape de formage actuelle ou une grandeur qui en dépend ou/et
- une température du dispositif de formage ou/et
- une propriété géométrique de la pièce à usiner ou/et
- une propriété géométrique d'une pièce à usiner déformée au moyen du dispositif de formage dans un processus de formage précédent, et dans lequel la commande du dispositif de déplacement dans l'étape de formage actuelle s'effectue en outre en tenant compte d'une force de formage qui a été mesurée lors du formage de la pièce à usiner respective et exactement unique dans une étape de formage de la même pièce à usiner précédant l'étape de formage actuelle, dans lequel la grandeur de réglage $y_{RS}$ est déterminée en utilisant le terme d'influence de la force

$$k_{1f} \cdot \left( F_{1mittel} - F_{1Ist} \right)$$

dans lequel $F_{1Ist}$ est la force de formage à mesurer lors de la formage de la pièce à usiner dans une étape de formage précédant l'étape de formage actuelle et à prendre en compte en plus lors de la commande du dispositif de déplacement ou une grandeur qui en dépend, $F_{1mittel}$ est une valeur moyenne de la force de formage $F_{1Ist}$ ou d'une grandeur qui en dépend dans la même étape de formage concernée de processus de formage précédents et $k_{1f}$ est un paramètre de régulation de l'influence de la force.

2. Procédé selon la revendication 1, dans lequel l'étape de formage actuelle est la dernière étape de formage dans le processus de formage de la pièce à usiner.

3. Procédé selon la revendication 1 ou 2, dans lequel la force de formage à mesurer lors du formage de la pièce à usiner dans une étape de formage précédant l'étape de formage actuelle et à prendre en compte en plus lors de la commande du dispositif de déplacement est supérieure à la force de formage à appliquer dans l'étape de formage actuelle.

4. Procédé selon l'une des revendications précédentes, **caractérisé en ce que** la grandeur de commande $y_{RS}$ prédéfinit comme position de formage une position de rapprochement ou d'éloignement maximal de l'outil de formage et du contre-outil ou comme consigne de force une force de déplacement maximale ou une force de formage maximale.

5. Procédé selon l'une des revendications précédentes, **caractérisé en ce que** les effets sur les propriétés géométriques de la pièce à usiner sont compensés en raison d'écarts de la géométrie et/ou d'une propriété du matériau brut et/ou de modifications de la géométrie thermique du dispositif de formage.

6. Procédé selon l'une des revendications précédentes, **caractérisé en ce que** la grandeur de réglage $y_{RS}$ est déterminée en utilisant le terme d'influence de la force.

$$k_f \cdot (F_{mittel} - F_{Ist})$$

dans lequel $F_{Ist}$ est une force de formage ou une grandeur qui en dépend dans l'étape de formage actuelle, $F_{mittel}$ est une valeur moyenne de la force de formage $F_{Ist}$ ou une grandeur qui en dépend au même endroit dans le déroulement de processus de formage précédents et $k_f$ est un paramètre de régulation de l'influence de la force.

7. Procédé selon la revendication 6, **caractérisé en ce que** la valeur moyenne $F_{mittel}$ de la force de formage ou d'une grandeur $F_{Ist}$ qui en dépend est calculée selon la formule

$$F_{mittel} = \frac{1}{N_F} \sum_{i=1}^{N_F} \left( F_{Ist}^i \right)$$

où i = 1 désigne la dernière opération de formage précédente et $N_F$ est le nombre de valeurs à additionner de la force de formage ou d'une grandeur qui en dépend de processus de formage précédents.

8. Procédé selon l'une des revendications précédentes, **caractérisé en ce que** la valeur moyenne $F_{1mittel}$ de la force de formage ou d'une grandeur qui en dépend $F_{1Ist}$ est déterminée selon la formule

$$F_{1mittel} = \frac{1}{N_F} \sum_{i=1}^{N_F} \left( F_{1Ist}^i \right)$$

où i = 1 désigne le dernier processus de formage précédent et $N_F$ est le nombre de valeurs à additionner de la force de formage ou d'une grandeur $F_{1Ist}$ qui en dépend des processus de formage précédents.

9. Procédé selon l'une des revendications précédentes, **caractérisé en ce qu'**une influence d'une grandeur dépendant de la force de formage par une force d'accélération mesurée conjointement à partir d'une accélération d'une partie du dispositif de formage est réduite ou éliminée en soustrayant une force d'accélération calculée ou/et mesurée, au moins approximative, de la grandeur dépendant de la force de formage.

10. Procédé selon l'une des revendications 1 à 8, **caractérisé en ce que** l'on évite d'influencer la force de formage mesurée ou une grandeur qui en dépend par une force d'accélération mesurée en même temps et résultant d'une accélération d'une partie du dispositif de formage, en mesurant la force de formage ou une grandeur $F_{Ist}$ ou $F_{1Ist}$ qui en dépend pendant une phase de formage à vitesse constante du dispositif de déplacement.

11. Procédé selon l'une des revendications précédentes, **caractérisé en ce que**

a) la grandeur réglant $y_{RS}$ pour provoquer un comportement de régulation intégral est déterminée: dans le cas d'une régulation analogique, en utilisant le terme intégratif

$$k_i \cdot \int (y_{Soll} - y_{Ist})$$

ou, dans le cas d'une régulation numérique, en utilisant le terme quasiintégratif

$$k_i \cdot \sum_{i}^{i-N_I} \left( y_{Soll} - y_{Ist}^{i-1} \right)$$

dans lequel une valeur de mesure d'une propriété géométrique de la pièce à usiner est respectivement introduite dans le terme en tant que valeur réelle $y_{Ist}$, $k_i$ en tant que constante de régulation de la composante intégrale et $y_{Soll}$ en tant que valeur de consigne pour la propriété géométrique de la pièce à usiner, et $N_l$ définit un nombre de différences à additionner à partir de $y_{soll}$ et $y_{Ist}$,
ou/et

b) la grandeur de commande $y_{RS}$, pour obtenir un comportement de régulation proportionnel est déterminée: dans le cas d'une régulation analogique, en utilisant le terme proportionnel

$$k_p \cdot \left( y_{Soll} - y_{Ist} \right)$$

ou, dans le cas d'une régulation numérique, en utilisant le terme

$$k_p \cdot \left( y_{Soll} - y_{Ist}^{i-1} \right)$$

dans lequel une valeur de mesure d'une propriété géométrique de la pièce à usiner est respectivement intégrée dans le terme comme valeur réelle $y_{Ist}$, $k_p$ comme constante de régulation proportionnelle et $y_{soll}$ comme valeur de consigne pour la propriété géométrique de la pièce à usiner.

12. Procédé selon l'une des revendications 6 à 11, **caractérisé en ce que**, pour déterminer au moins l'un des paramètres de régulation $k_p$, $k_i$ et/ou $k_f$, on utilise une méthode d'optimisation simulant au moins partiellement l'opération de formage, dans laquelle entrent des paramètres de régulation $k_p$, $k_i$ et/ou $k_f$ à optimiser et, en option, une bande de tolérance admissible comme paramètres de départ, dans lequel l'optimisation des paramètres d'au moins un paramètre de régulation $k_p$, $k_i$ et/ou $k_f$ à optimiser est réalisée au moins avec les étapes suivantes : lecture de valeurs prédéfinies pour les paramètres de régulation à optimiser dans un modèle de simulation d'au moins des parties du processus de formage, application des paramètres de régulation à optimiser dans le modèle de simulation, comparaison des résultats de la simulation en ce qui concerne la dispersion de la propriété géométrique à réguler de la pièce à usiner avec la bande de tolérance,

- si la propriété géométrique des pièces à usiner simulées se situe en dehors de la bande de tolérance, la variation d'au moins un des paramètres à optimiser, l'application des paramètres à optimiser modifiés dans le modèle de simulation,
la comparaison des résultats de la simulation en ce qui concerne la dispersion de la propriété géométrique de la pièce à usiner avec la bande de tolérance,
- si la propriété géométrique des pièces à usiner simulées se situe en dehors de la bande de tolérance, répéter facultativement la variation et les étapes mentionnées ci-après,
- si la caractéristique géométrique des pièces à usiner simulées se situe à l'intérieur de la bande de tolérance, utiliser le ou les paramètres de régulation optimisés pour la régulation du processus de formage.

13. Procédé selon l'une des revendications précédentes, **caractérisé en ce que** la position de formage $y_{RS}$ est déterminée en utilisant le terme de compensation de température

$$k_T \cdot \left( T_{Ref} - T_{Ist} \right)$$

dans lequel une valeur de mesure d'une température du dispositif de formage est la valeur réelle de température $T_{Ist}$, $T_{Ref}$ est une valeur de référence de température du dispositif de formage et $k_T$ est une constante de régulation de compensation de température.

14. Procédé selon l'une des revendications précédentes, **caractérisé en ce que** la position de formage $y_{RS}$ est déterminée en utilisant un terme de compensation de relaxation $y_{Rlx}$, qui est soustrait ou ajouté à $y_{RS}$ pour compenser la relaxation.

15. Procédé selon l'une des revendications précédentes, **caractérisé en ce que** l'on utilise comme dispositif de déplacement un entraînement par moteur électrique à commande numérique et **en ce que** l'on utilise comme régulation une régulation numérique.

16. Dispositif pour la mise en oeuvre d'un processus de formage en plusieurs étapes selon un procédé selon l'une des revendications précédentes, comprenant un dispositif de formage qui comprend un dispositif de commande, au moins un outil de formage et au moins un contre-outil pour le formage d'exactement une pièce à usiner à partir d'un matériau brut, ainsi qu'un dispositif de déplacement pour le déplacement de l'outil de formage et du contre-outil l'un par rapport à l'autre, dans lequel le dispositif de commande est destiné et adapté pour commander le dispositif de déplacement avec une grandeur de réglage $y_{RS}$, de telle sorte que l'outil de formage et/ou le contre-outil soit entraîné pour se déplacer dans une position de formage ou pour atteindre une force de formage, afin de doter la pièce à usiner d'une propriété géométrique prédéfinie en la soumettant à l'outil de formage et au contre-outil, dans lequel le dispositif de formage comprend des moyens de mesure pour détecter au moins une grandeur influençant l'obtention de la propriété géométrique prédéfinie de ladite exactement une pièce à usiner et en ce que le dispositif de commande est conçu pour commander le dispositif de déplacement en tenant compte de ladite au moins une grandeur à détecter par mesure, qui influence l'obtention de la propriété géométrique prédéfinie de ladite exactement une pièce à usiner, et dans lequel le dispositif de formage présente au moins un capteur de détection de force pour mesurer la force de formage dans une étape de formage actuelle d'un processus de formage respectif de ladite exactement une pièce à usiner,

dans lequel le dispositif de commande est conçu pour tenir compte de la force de formage mesurée au moyen du capteur de force lors de la commande du dispositif de déplacement dans une étape de formage du processus de formage de la même pièce à usiner et de ladite exactement une pièce à usiner suivant l'étape de formage actuelle de ladite exactement und pièce à usiner, dans lequel la grandeur de réglage $y_{RS}$ est déterminée en utilisant le terme d'influence de force

$$k_{1f} \cdot (F_{1mittel} - F_{1Ist})$$

dans lequel $F_{1Ist}$ est la force de formage à mesurer lors de la formage de la pièce à usiner dans une étape de formage précédant l'étape de formage actuelle et à prendre en compte en plus lors de la commande du dispositif de déplacement, ou une grandeur qui en dépend, $F_{1mittel}$ est une valeur moyenne de la force de formage $F_{1Ist}$ ou d'une grandeur qui en dépend dans la même étape de formage concernée de processus de formage précédents, et $k_{1f}$ est un paramètre de régulation d'influence de force.

EP 2 821 215 B1

**Fig. 1**

$$F_{1mittel} = \frac{1}{40}\sum_{i=1}^{40} F_{1i}$$

$y_{Soll}$

$k_{1f}$

$k_p$

$k_i$

$-\ y_{RS}^i$

$F_i$

$F_{1i}$

$y_{Ist}^i$

$y_{Ist}^{i-1}$

**Fig. 2**

Fig. 3

Fig. 4

EP 2 821 215 B1

S1

Ausgangswerte für K$_f$ oder K$_p$-Parameter

S2

S3

Streuung des Öffnungsmaßes kleiner als die Hälfte des Toleranzbereiches

Nein    S5

Ja

S4

Parameter beibehalten

Parameter K$_f$ relativ zum Ausgangswert um ca. 5 bis 10 Einheiten reduzieren Parameter K$_p$ relativ zum Ausgangswert um 0,25 bis 0,5 Einheiten reduzieren

S7

S6

Wurde Streuung des Öffnungsmaßes reduziert?

Ja

Nein    S9

S8

Neue Parameter beibehalten

Parameter K$_f$ relativ zum Ausgangswert um ca. 5 bis 10 Einheiten erhöhen Parameter K$_p$ relativ zum Ausgangswert um 0,25 bis 0,5 Einheiten erhöhen

S11

S10

Wurde Streuung des Öffnungsmaßes reduziert?

S12    Ja

Nein    S13

Neue Parameter beibehalten

Ablauf mit größerer Änderung der Parameter wiederholen

# Fig. 5

$k_T$

$T_{Ref}$

$T_i$

$k_f$

$$F_{mittel} = \frac{1}{40}\sum_{i=1}^{40} F_i$$

$F_i$

$k_{1f}$

$$F_{1mittel} = \frac{1}{40}\sum_{i=1}^{40} F_{1i}$$

$F_{1i}$

$y_{Soll}$

$k_p$

$k_i$

$y_{RS}^i$

$y_{Ist}^i$

$y_{Ist}^{i-1}$

Fig. 6

Fig. 7

EP 2 821 215 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5857366 A